# EUROPÄISCHE PATENTSCHRIFT

(11) **EP 3 252 735 B1**
(45) Veröffentlichungstag und Bekanntmachung des Hinweises auf die Patenterteilung: **02.03.2022**
(21) Anmeldenummer: 17163660.8
(22) Anmeldetag: 29.03.2017
(51) Int. Cl.: G08G 5/00, H04B 7/185

(54) **VERFAHREN ZUR VERMITTLUNG VON SPRACHKOMMUNIKATION**
METHOD FOR TRANSFERRING VOICE COMMUNICATION
PROCÉDÉ DE TRANSMISSION DE COMMUNICATION VOCALE

(30) Priorität: 02.05.2016 AT 504012016
(43) Veröffentlichungstag der Anmeldung: 06.12.2017
(73) Patentinhaber: Frequentis AG, 1100 Wien (AT)
(72) Erfinder: HAINDL, Bernhard, 3562 Mollands (AT)
(74) Vertreter: Wildhack & Jellinek

(56) Entgegenhaltungen:
- EP-A1- 2 481 039
- DE-A1-102012 104 391
- US-A1- 2008 120 020
- US-B1- 6 185 430

## Beschreibung

Die Erfindung betrifft ein Verfahren sowie eine Anordnung zur Vermittlung von Sprachkommunikation zwischen Lotsen und Luftfahrzeugen, die sich innerhalb des von den Lotsen überwachten Luftraums befinden.

Aus dem Stand der Technik ist es grundsätzlich bekannt, dass Lotsen über ein Vermittlungssystem jeweils Kommunikation mit Luftfahrzeugen betreiben, die sich innerhalb des jeweiligen Lotsen kontrollierten Luftraums befinden.

Das Dokument US2008120020 offenbart ein Verfahren und ein System zum Koordinieren von Bodenfunkzuweisungen für Flugzeuge, die in einem kontrollierten Luftraum operieren, zu Bodenfunkgeräten umfassend den Schritt des Empfangen einer Vielzahl von Flugzeuginformationseingaben von beispielsweise einer ATC-Einrichtung. Das Verfahren umfasst auch den Schritt des Empfangen einer Vielzahl von Bodenfunkinformationseingaben. In einem weiteren Schritt werden die Luftfahrzeug-Informationseingaben und die BodenfunkInformationseingaben im Hinblick auf Netzwerkmanagement-Überlegungen verarbeitet.

In einem weiteren Schritt des Verfahrens wird unter Verwendung der verarbeiteten Flugzeuginformationseingaben und der verarbeiteten Bodenfunkinformationseingaben eine Zuordnung zu einem Bodenfunkgerät für jedes Flugzeug innerhalb des Luftraums erstellt.

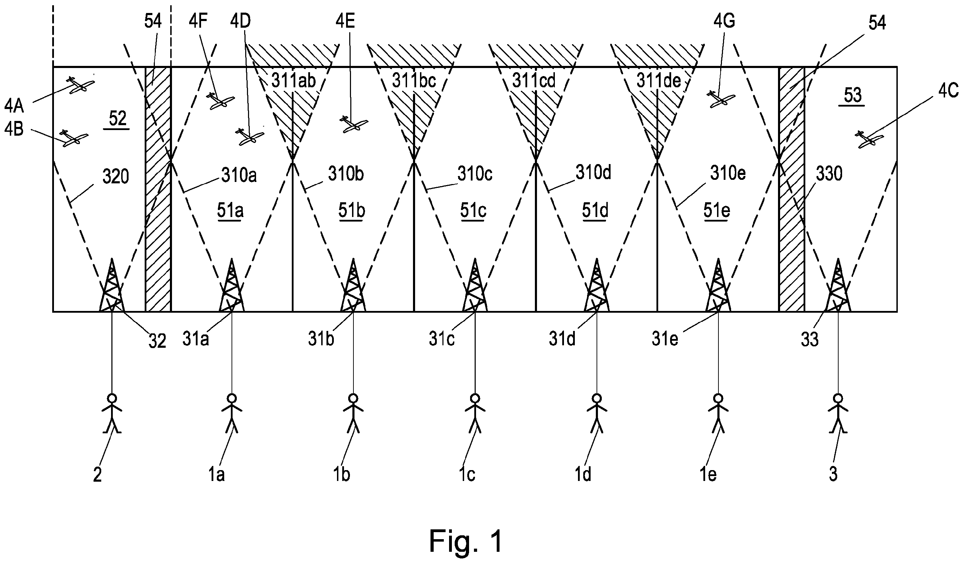

Das bekannte Vorgehen zur Überwachung mehrerer Lufträume ist in Fig. 1 näher dargestellt. Fig. 1 zeigt eine Vielzahl von Teillufträumen 51a-51e; 52; 53, wobei jedem Luftraum 51a-51e; 52, 53 jeweils ein einzelner Lotse 1a-1e, 2, 3 zugewiesen ist. Darüber hinaus ist jedem dieser Lufträume 51a-51e; 52; 53 auch jeweils eine Sende- und Empfangsanlage 31a-31e; 32; 33 exklusiv zugewiesen, sodass terrestrische Funk-Sprachkommunikation, die den jeweiligen Luftraum 51a-51e; 52, 53 betrifft, jeweils über einen separaten Kanal erfolgt. Jeder Luftraum wird dabei vom Abdeckungsbereich 310a-310e; 320; 330 jeweils genau einer Sende- und Empfangsanlage 31a-31e; 32; 33 abgedeckt. Jedes Luftfahrzeug 4A-4G befindet sich jeweils in einem Luftraum, steht daher im Abdeckungsbereich einer Sende- und Empfangsanlage 31a-31e; 32; 33 und kann mit dem den jeweiligen Luftraum 31a-31e; 32; 33 überwachenden Lotsen 1a-1e; 2; 3 kommunizieren.

Wesentlicher Nachteil dieses Vorgehens ist es, dass für jeden der zu überwachenden Lufträume jeweils genau ein Lotse zur Verfügung stehen muss. Da einzelne Lufträume jedoch zu unterschiedlichen Zeiten unterschiedlich stark ausgelastet sind und die Auslastung nicht notwendigerweise vorhersehbar ist, kann diese Verteilung der Lotsen auf einzelne Lufträume zu unterschiedlichen Auslastungen führen. Insbesondere kann es zu Sicherheitsproblemen führen, wenn die Lotsen einzelner Lufträume überlastet sind, und dies obwohl die Lotsen der anderen Lufträume nur geringe Auslastung haben.

Aufgrund von erforderlichen Effizienzsteigerungen in der Flugsicherung ist es daher grundsätzlich angedacht, dass mehrere Lotsen denselben Luftraum überwachen sollen, wobei konkrete Realisierungen eines Kommunikationssystems oder der Sprachvermittlung zwischen einer Vielzahl von Lotsen und den mit ihnen in Sprachkommunikation stehenden Luftfahrzeugen über einen größeren zusammenhängenden Luftraum, insbesondere über eine Vielzahl unterschiedlicher Sende- und Empfangsanlagen, insbesondere für terrestrischen Funk, aus dem Stand der Technik nicht bekannt sind.

Die Erfindung setzt sich zur Aufgabe, ein Sprachvermittlungssystem sowie ein Verfahren zur Vermittlung von Sprachkommunikation zur Verfügung zu stellen, mit der mehrere Lotsen in einem sich weiträumig erstreckenden und vom Abdeckungsbereich einer Vielzahl von Sende- und Empfangsanlagen abgedeckten Luftraum Luftfahrzeuge überwachen. Dazu kommt, dass eine solche Sprachkommunikation für die betreffenden Luftfahrzeuge mit aus dem Stand der Technik zur Verfügung stehenden Mitteln realisierbar sein muss und es insbesondere nicht möglich ist, in die bestehende Kommunikationshardware von Luftfahrzeugen einzugreifen.

Die Erfindung löst diese Aufgabe bei einem Verfahren der eingangs genannten Art mit den kennzeichnenden Merkmalen des Patentanspruchs 1 und eine Anordnung mit den kennzeichnenden Merkmale des Patentanspruchs 9.

Die Erfindung sieht bei einem Verfahren zur Vermittlung von Sprachkommunikation zwischen einer Anzahl von Lotsen und einer Anzahl von sich innerhalb desselben Luftraums befindlichen Luftfahrzeugen, wobei alle Lotsen über jeweils einen Lotsen-Arbeitsplatz verfügen, der an eine Sprachvermittlungseinheit gekoppelt ist und wobei Sende- und Empfangsanlagen zur drahtlosen, insbesondere terrestrischen, Übertragung von Sprechfunk an Luftfahrzeuge vorhanden sind, die an die Sprachvermittlungseinheit angekoppelt sind, wobei jede Sende- und Empfangsanlagen jeweils einen vorgegebenen Abdeckungsbereich innerhalb des Luftraums aufweist und wobei die Luftfahrzeuge innerhalb des Luftraums jeweils mit zumindest einer der Sende- und Empfangsanlagen in Verbindung stehen vor,
dass die Lotsen den Luftraum gemeinsam verwalten, wobei eine Zuordnung vorgenommen wird, mit der jedem der Lotsen jeweils eine Teilmenge der innerhalb des Luftraums befindlichen Luftfahrzeuge ausschließlich zugewiesen wird, dass die Position der Luftfahrzeuge innerhalb des Luftraums erfasst wird und festgestellt wird, im Abdeckungsbereich welcher der Sende- und Empfangsanlagen sich die einzelnen Luftfahrzeuge befinden, und das betreffende Luftfahrzeug dem jeweiligen Abdeckungsbereich sowie der jeweiligen Sende- und Empfangsanlage zugeordnet wird.

In weiteren Schritten f) und g) ist vorgesehen, dass für den Fall, dass einer der Lotsen eine Sprachmitteilung an ein ihm zugewiesenes Luftfahrzeug abgibt, die Sprachmitteilung nur an die dem jeweiligen Luftfahrzeug zugeordnete Sende- und Empfangsanlage weitergeleitet wird, und dass für den Fall, dass eine Sende- und Empfangsanlage, eine Sprachmitteilung empfängt, die empfangene Sprachmitteilung diejenigen Lotsen weitergeleitet wird, denen zumindest ein Luftfahrzeug zugewiesen ist, das sich im Abdeckungsbereich der betreffenden Sende- und Empfangsanlage befindet.

Der wesentliche Vorteil der Erfindung besteht darin, dass es ohne weiteres möglich ist, ohne Eingriffe in die Kommunikationshardware bestehender Luftfahrzeuge eine gemeinsame Überwachung eines Luftraums durch mehrere Lotsen vorzunehmen, auch wenn sich der gemeinsam überwachte Luftraum auf mehrere Abdeckungsbereiche von Sende- und Empfangsanlagen erstreckt.

Um über einen längeren Zeitraum eine stabile Kommunikation zu gewährleisten, kann vorgesehen sein, dass die Position der Luftfahrzeuge innerhalb des Luftraums nach einer vorgegebenen Zeitspanne neu erfasst wird und erneut festgestellt und aktualisiert wird, innerhalb welchen Abdeckungsbereichs sich das Luftfahrzeug befindet, und das betreffende Luftfahrzeug erneut dem jeweiligen Abdeckungsbereich zugeordnet wird.

Eine besonders einfache Auswahl eines von einem Lotsen überwachten Luftfahrzeugs als Kommunikationspartner kann erreicht werden, indem ihm auswählbare Kontrollfelder der ihm zugewiesenen Luftfahrzeuge auf einem Funkbedienelement dargestellt werden und er das betreffende Luftfahrzeug mittels der Kontrollfelder auswählt, oder indem ihm auf einem Radarbedienelement die im Luftraum befindlichen Luftfahrzeuge entsprechend ihrer Position als Symbol dargestellt sind und er durch Auswahl einer Position dasjenige Symbol eines Luftfahrzeugs auswählt, das sich an der betreffenden Position befindet, wobei gegebenenfalls eine Sprachverbindung nur dann erfolgt, wenn das ausgewählte Luftfahrzeug dem auswählenden Lotsen zugewiesen ist.

Zur Koordination unter den den Luftraum gemeinsam überwachenden Lotsen kann vorgesehen sein, dass ein erster den Luftraum überwachenden Lotsen einen zweiten der denselben Luftraum überwachenden Lotsen für die Übermittelung einer Sprachmitteilung auswählt, indem der erste Lotse ein vom zweiten Lotsen überwachtes Luftfahrzeug, insbesondere auf dem Radarbedienelement, anwählt und der zweite Lotse entsprechend der Zuordnung im Sprachvermittlungssystem anhand des ausgewählten Luftfahrzeugs ermittelt wird und für die Übermittlung der Sprachmitteilung ausgewählt wird, oder indem dem ersten Lotsen sämtliche denselben Luftraum überwachenden Lotsen sowie die diesen zugeordneten Luftfahrzeuge an einem Funkbedienelement angezeigt werden und der erste Lotse entweder den zweiten Lotsen direkt auswählt oder ein diesem zugeordnetes Luftfahrzeug auswählt und der zweite Lotse aufgrund der Zuordnung zum ausgewählten Luftfahrzeug ermittelt wird, und dass der erste Lotse dem zweiten Lotsen anschließend die Sprachmitteilung übermittelt.

Um eine geordnete Kommunikation mit benachbarten Lufträumen zu gewährleisten, kann vorgesehen sein, dass für den Fall, dass ein Luftfahrzeug in den Nahebereich des zu überwachenden Luftraums gelangt, das betreffende Luftfahrzeug einem der Lotsen nach vorgegebenen Kriterien zugeordnet wird.

Dabei kann eine Verbindung mit dem jeweils zuständigen Lotsen vorteilhafterweise erreicht werden, indem eine Sprachmitteilung eines einen benachbarten Luftraum überwachenden Lotsen an denjenigen oder diejenigen Lotsen weitergeleitet wird, dem oder denen diese Luftfahrzeuge zugewiesen wurden, die sich im Nahebereich des zu überwachenden Luftraums im benachbarten Luftraum befinden, wobei bei einer Mehrzahl von unterschiedlichen Lotsen zugeordneten Luftfahrzeugen gegebenenfalls eine Konferenzschaltung zwischen diesen Lotsen und dem Lotsen des benachbarten Luftraums eingerichtet wird.

Für allgemeine Kommunikation mit Lotsen von benachbarten Lufträumen kann vorgesehen sein, dass eine Sprachmitteilung eines einen benachbarten Luftraum überwachenden Lotsen, wenn sich in dem jeweiligen benachbarten Luftraum kein zugewiesenes Luftfahrzeug befindet, an alle oder einen vorgegebenen Lotsen des zu überwachenden Luftraums weitergeleitet wird.

Zur Vermeidung von Fehlern für den Fall, dass dasselbe Luftfahrzeug erneut in den gemeinsam überwachten Luftraum eintritt, kann vorgesehen sein, dass für den Fall, dass ein Luftfahrzeug den überwachten Luftraum verlässt, die Zuordnung des Luftfahrzeugs zu dem jeweiligen Lotsen gelöscht wird.

Die Erfindung sieht bei einer Anordnung zur Vermittlung von Sprachkommunikation zwischen einer Anzahl von Lotsen und einer Anzahl von sich innerhalb desselben Luftraums befindlichen Luftfahrzeugen, umfassend eine Sprachvermittlungseinheit, für jeden Lotsen über jeweils einen Lotsen-Arbeitsplatz, der an eine Sprachvermittlungseinheit gekoppelt ist und Sende- und Empfangsanlagen zur drahtlosen Übertragung von Sprechfunk an Luftfahrzeuge, die an die Sprachvermittlungseinheit angekoppelt sind, wobei jede Sende- und Empfangsanlagen jeweils einen vorgegebenen Abdeckungsbereich innerhalb des Luftraums aufweist vor, dass eine Zuordnungseinheit vorgesehen ist, die jedem der Lotsen jeweils eine Teilmenge der innerhalb des Luftraums befindlichen Luftfahrzeuge ausschließlich zuweist, dass eine Positionsbestimmungseinheit vorgesehen ist, die die Position der Luftfahrzeuge innerhalb des Luftraums erfasst wird, dass eine Lokalisierungseinheit vorgesehen ist, die aufgrund der von der Positionsbestimmungseinheit erfassten Position für die einzelnen Luftfahrzeuge feststellt, im Abdeckungsbereich welcher der Sende- und Empfangsanlagen sich die einzelnen Luftfahrzeuge befinden, und die einzelnen Luftfahrzeuge dem jeweiligen Abdeckungsbereich sowie der jeweiligen Sende- und Empfangsanlage zuordnet, und diese Zuordnung an die Sprachvermittlungseinheit weiterleitet, dass die Sprachvermittlungseinheit dazu ausgebildet ist, für den Fall, dass einer der Lotsen eine Sprachmitteilung an ein ihm zugewiesenes Luftfahrzeug abgibt, die Sprachmitteilung an die dem jeweiligen Luftfahrzeug zugeordnete Sende- und Empfangsanlage weiterzuleiten, und dass die Sprachvermittlungseinheit dazu ausgebildet ist, für den Fall, dass eine Sende- und Empfangsanlage, eine Sprachmitteilung empfängt, die empfangene Sprachmitteilung diejenigen Lotsen weiterzuleiten, denen zumindest ein Luftfahrzeug zugewiesen ist, das sich im Abdeckungsbereich der betreffenden Sende- und Empfangsanlage befindet.

Um über einen längeren Zeitraum eine stabile Kommunikation zu gewährleisten, kann vorgesehen sein, dass die Positionsbestimmungseinheit die Position der Luftfahrzeuge innerhalb des Luftraums nach einer vorgegebenen Zeitspanne neu erfasst und an die Lokalisierungseinheit weiterleitet, wobei die Lokalisierungseinheit dazu ausgebildet ist, bei Einlangen neuer Positionen von Luftfahrzeugen erneut zu ermitteln, innerhalb welchen Abdeckungsbereichs sich das Luftfahrzeug befindet, und das betreffende Luftfahrzeug erneut dem jeweiligen Abdeckungsbereich zuzuordnen und diese Zuordnung an die Sprachvermittlungseinheit weiterzuleiten.

Eine besonders einfache Auswahl eines von einem Lotsen überwachten Luftfahrzeugs als Kommunikationspartner kann erreicht werden, indem für jeden Lotsen jeweils ein Funkbedienelement und/oder Radarbedienelement vorgesehen ist, das dem Lotsen die Auswahl eines ihm zugewiesenen Luftfahrzeugs für die Übermittlung einer Sprachmitteilung anbietet, indem das Funkbedienelement Anzahl von Kontrollfeldern für die ihm zugewiesenen Luftfahrzeuge darstellt und dem Lotsen die Auswahl des betreffenden Luftfahrzeugs durch Anwahl des Kontrollfelds erlaubt, oder indem das Radarbedienelement die im Luftraum befindlichen Luftfahrzeuge entsprechend ihrer Position als Symbol darstellt und dem Lotsen durch Auswahl einer Position desjenigen Symbols eines Luftfahrzeugs erlaubt, das sich an der betreffenden Position befindet, wobei gegebenenfalls das Radarbedienelement eine Zuordnung nur dann vornimmt, wenn das ausgewählte Luftfahrzeug dem auswählenden Lotsen zugewiesen ist.

Zur Koordination unter den den Luftraum gemeinsam überwachenden Lotsen kann vorgesehen sein, dass die Sprachvermittlungseinheit auf Anfrage eines ersten den Luftraum überwachenden Lotsen eine Kommunikationsverbindung mit einem zweiten denselben Luftraum überwachenden Lotsen zum Austausch und zur Übermittelung von Sprachmitteilungen aufbaut, wobei das Radarbedienelement dem ersten Lotsen die von den übrigen denselben Luftraum überwachenden Lotsen überwachten Luftfahrzeuge darstellt und zur Auswahl anbietet, und die Sprachvermittlungseinheit bei Auswahl eines entsprechend der vorgenommenen Zuordnung von einem zweiten Lotsen überwachten Luftfahrzeugs die Kommunikationsverbindung zwischen dem ersten und dem zweiten Lotsen aufbaut, oder wobei das Radarbedienelement dem ersten Lotsen die den übrigen Lotsen zugeordneten Luftfahrzeuge entsprechend ihrer Position als Symbole anzeigt und zur Anwahl zur Verfügung hält und die Sprachvermittlungseinheit bei Auswahl eines entsprechend der vorgenommenen Zuordnung von einem zweiten Lotsen überwachten Luftfahrzeugs die Kommunikationsverbindung zwischen dem ersten und dem zweiten Lotsen aufbaut.

Um eine geordnete Kommunikation mit benachbarten Lufträumen zu gewährleisten, kann vorgesehen sein, dass die Zuordnungseinheit für den Fall, dass ein Luftfahrzeug in den Nahebereich des zu überwachenden Luftraums gelangt, das betreffende Luftfahrzeug einem der Lotsen nach vorgegebenen Kriterien zuordnet.

Dabei kann eine Verbindung mit dem jeweils zuständigen Lotsen vorteilhafterweise erreicht werden, indem die Sprachvermittlungseinheit eine Sprachmitteilung eines einen benachbarten Luftraum überwachenden Lotsen an denjenigen oder diejenigen Lotsen weiterleitet, dem oder denen diese Luftfahrzeuge zugewiesen sind, die sich im Nahebereich des zu überwachenden Luftraums im benachbarten Luftraum befinden, wobei die Sprachvermittlungseinheit bei einer Mehrzahl von unterschiedlichen Lotsen zugeordneten Luftfahrzeugen gegebenenfalls eine Konferenzschaltung zwischen diesen Lotsen und dem Lotsen des benachbarten Luftraums einrichtet.

Für allgemeine Kommunikation mit Lotsen von benachbarten Lufträumen kann vorgesehen sein, dass die Sprachvermittlungseinheit eine Sprachmitteilung eines einen benachbarten Luftraum überwachenden Lotsen, wenn sich in dem jeweiligen benachbarten Luftraum kein zugewiesenes Luftfahrzeug befindet, an alle oder einen vorgegebenen Lotsen des zu überwachenden Luftraums weiterleitet.

Zur Vermeidung von Fehlern für den Fall, dass dasselbe Luftfahrzeug erneut in den gemeinsam überwachten Luftraum eintritt, kann vorgesehen sein, dass die Zuordnungseinheit für den Fall, dass ein Luftfahrzeug den überwachten Luftraum verlässt, die Zuordnung des Luftfahrzeugs zu dem jeweiligen Lotsen löscht.

Eine bevorzugte Ausführungsform der Erfindung ist anhand der folgenden Zeichnungsfiguren näher dargestellt.

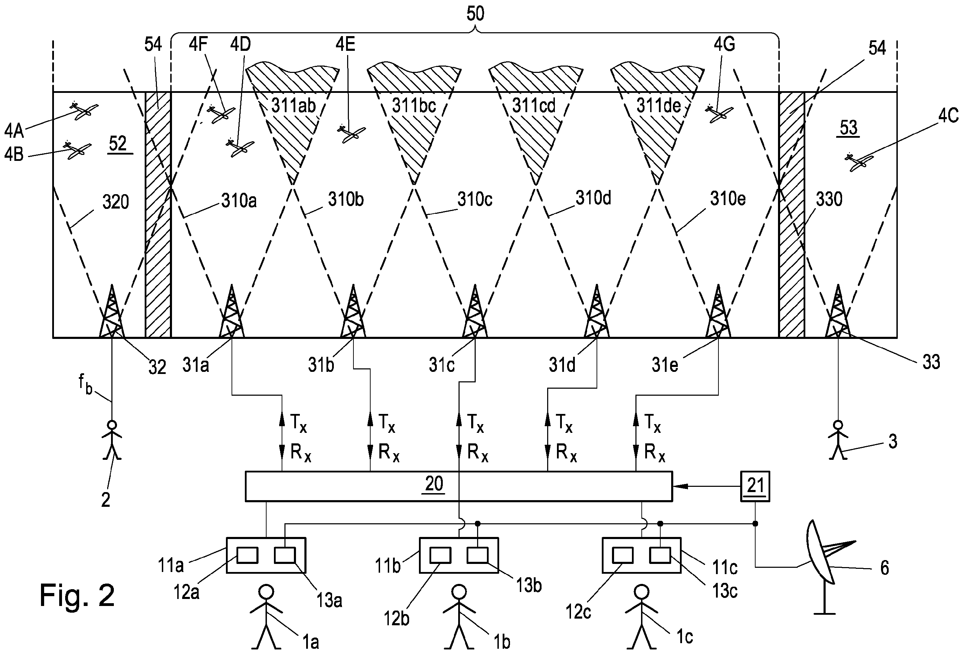

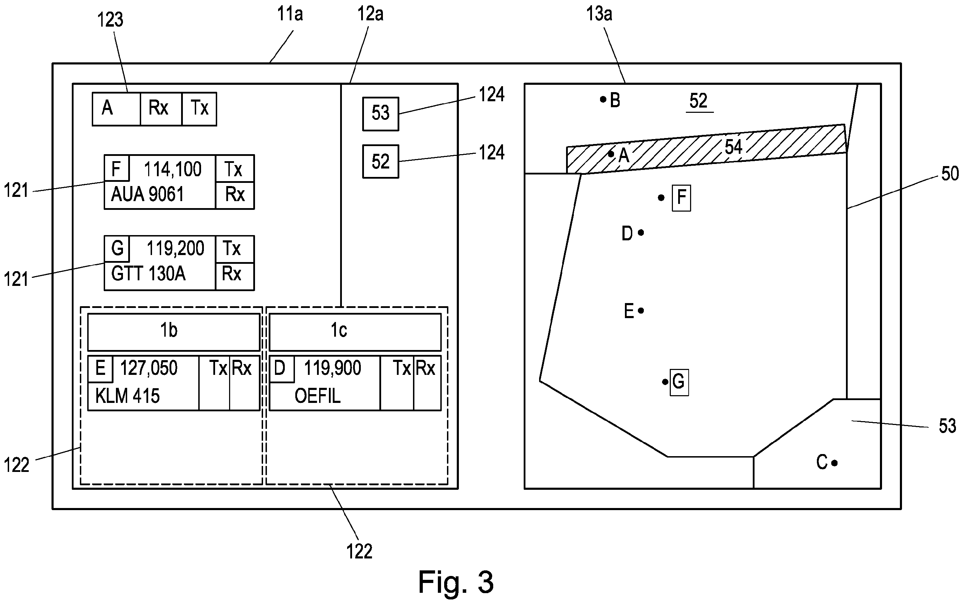

**Fig. 1** zeigt schematisch eine in Sektoren geteilte Kommunikationsstruktur gemäß dem Stand der Technik. **Fig. 2** zeigt schematisch eine mögliche Ausführungsform einer erfindungsgemäßen Anordnung. **Fig. 3** zeigt schematisch einen Lotsen-Arbeitsplatz mit einer Bedieneinheit und einem Radarbedienelement.

In **Fig. 2** ist eine Vielzahl von Lufträumen 51a-51e; 52; 53 dargestellt. Die am Rand dargestellten Lufträume 52, 53 werden konventionell von jeweils einem einzigen Lotsen 2, 3 überwacht, der Luftraum 50 umfassend die einzelnen Abdeckungsbereiche 310a-310e wird von einer Anzahl an Lotsen 1a-1c überwacht, die je nach Gesamtauslastung des Luftraums 50 variieren kann.

Jedem der Lufträume 50, 52, 53 ist auch jeweils zumindest eine terrestrische Sende- und Empfangsanlage 31a-31e; 32, 33 zugewiesen, sodass Sprachkommunikation, die den jeweiligen Luftraum 51a-51e; 52; 53 betrifft jeweils über einen separaten Kanal mit dem jeweiligen Lotsen 1a-1c; 2; 3 kommuniziert werden kann.

Sofern sich innerhalb des Abdeckungsbereichs einer Sende- und Empfangsanlage mehrere separate Lufträume befinden, besteht auch die Möglichkeit, dass aufgrund der Auswahl einer konkreten Frequenz ein eindeutiger Kommunikationskanal zwischen dem Lotsen und dem jeweiligen innerhalb des von ihm kontrollierten Luftraums befindlichen Luftfahrzeuge möglich ist.

Bei der in **Fig. 2** dargestellten Ausführungsform einer erfindungsgemäßen Anordnung wird der gemeinsam zu überwachende Luftraum 50 nicht vollständig vom Abdeckungsbereich 310a-310e einer einzigen Sende- und Empfangsanlage 31a-31e erfasst. Vielmehr liegt der gemeinsame Luftraum 50 im gemeinsamen Abdeckungsbereich 310a-310e einer Vielzahl von Sende- und Empfangsanlagen 31a-31e. Das Sprachvermittlungssystem 20 ist an sämtliche Sende- und Empfangsanlagen 31a-31e; 32, 33 zur drahtlosen Übertragung von Sprechfunk an Luftfahrzeuge angekoppelt. Der Abdeckungsbereich 310a-310e; 320, 330 deckt gemeinsam den Luftraum 50 ab. Damit ist es möglich, dass Luftfahrzeuge 4D-4G, die sich innerhalb des Luftraums 50 befinden, jeweils mit zumindest einer der Sende- und Empfangsanlagen 31a-31e; in Kommunikationsverbindung stehen und derart an die Sprachvermittlungseinheit 20 angekoppelt sind. Aufgrund der weiten räumlichen Erstreckung des gemeinsamen Luftraums 50 ist es erforderlich, dass eine Anzahl von Lotsen 1a, 1b, 1c über eine Vielzahl von Sende- und Empfangsanlagen mit den Luftfahrzeugen 4D-4G in Kommunikationsverbindung steht, die sich innerhalb des Luftraums 50 befinden. Die Lotsen 1a, 1b, 1c verwalten den Luftraum 50 insofern gemeinsam, als unter sämtlichen den Luftraum 50 verwaltenden Lotsen 1a, 1b, 1c mittels einer Zuordnungseinheit eine Zuordnung vorgenommen wird, mit dem jedem der Lotsen 1a, 1b, 1c jeweils eine Teilmenge der innerhalb des Luftraums 50 befindlichen Luftfahrzeuge 4D-4G ausschließlich zugewiesen wird. Im vorliegenden Ausführungsbeispiel verwaltet der erste Lotse 1a die Luftfahrzeuge 4F und 4G, der zweite Lotse 1b das Luftfahrzeug 4E und der dritte Lotse 1c das Luftfahrzeug 4D. Die Zuordnung (Tabelle 1) der Lotsen zu Luftfahrzeugen kann wie folgt in der Sprachvermittlungseinheit 20 abgespeichert werden:

**Tabelle 1: Zuordnung zwischen Lotsen und Luftfahrzeugen**

| Lotse | Luftfahrzeug |
|---|---|
| 1a | 4F |
| 1a | 4G |
| 1b | 4E |
| 1c | 4D |

Es ist dabei für die Zuordnung zu einem Lotsen gerade nicht erforderlich, dass sich die einem Lotsen zugeordneten einzelnen Luftfahrzeuge 4D-4G innerhalb des Abdeckungsbereichs einer bestimmten Sende- und Empfangsanlage 31a-31e; befinden. Vielmehr ist es möglich, dass jedem Lotsen 1a, 1b, 1c Luftfahrzeuge 4D-4G zugewiesen sind, die sich in unterschiedlichen Abdeckungsbereichen 310a-310e von Sende- und Empfangsanlagen 31a-31e; 32, 33 befinden, wobei sich in diesen Abdeckungsbereichen 310a-310e; 320, 330 auch Luftfahrzeuge 4D, 4F befinden können, die von anderen Lotsen 1a, 1b, 1c geleitet bzw. kontrolliert werden.

Sämtliche dieser Lotsen 1a, 1b, 1c verfügen über einen Lotsenarbeitsplatz 11a, 11b, 11c, wobei der einzelne Lotse 1a, 1b, 1c jeweils über ein Mikrofon als auch über einen Lautsprecher oder Kopfhörer verfügt, mit dem er Sprachmitteilungen empfangen und versenden kann. Den Arbeitsplätzen 11a, 11b, 11c ist die Sprachvermittlungseinheit 20 nachgeschaltet, an die auch die einzelnen Sende- und Empfangsanlagen 31a-31e; 32, 33 angeschlossen sind. Die einzelnen Lotsenarbeitsplätze 11a, 11b, 11c verfügen jeweils über ein Funkbedienelement 12a, 12b, 12c sowie ein Radarbedienelement 13a, 13b, 13c, das vorzugsweise ein Radarbild darstellt (**Fig. 3**). Das Radarbedienelement 13a, 13b, 13c kann beispielsweise mittels einer Maus oder eines Touch-Pad betätigt werden.

Das Funkbedienelement 12a, 12b, 12c ermöglicht dem jeweiligen Lotsen 1a, 1b, 1c die Übertragung der von ihm abgegebenen Sprachfunkmeldungen TX über die Sprachvermittlungseinheit 20. Weiters ermöglicht ihm das Funkbedienelement 12a, 12b, 12c die Ansteuerung des Sprachvermittlungssystems 20 um einzelne, insbesondere von Luftfahrzeugen 4D-4G, abgegebene Sprachfunkmeldungen RX zu empfangen.

Das Funkbedienelement 12a zeigt dem jeweiligen Lotsen 1a jeweils ein Luftfahrzeug-Kontrollfeld 121 für jedes von ihm kontrollierte Luftfahrzeug 4F, 4G. Jedes Luftfahrzeug-Kontrollfeld 121 zeigt jeweils die aktuelle Kommunikationsfrequenz sowie eine Kennung des Luftfahrzeugs an. Schließlich wird im Luftfahrzeug-Kontrollfeld 121 auch dargestellt, ob im Moment Sprachfunkmeldungen TX an das jeweilige Luftfahrzeug 4F, 4G übertragen werden oder ob vom Luftfahrzeug 4F, 4G bzw einer Empfangsanlage 31a-31e, innerhalb deren Abdeckungsbereich sich das Luftfahrzeug 4F, 4G befindet, Sprachfunkmeldungen RX empfangen werden. Dies wird jeweils durch farbige Hinterlegung des Felds "TX" oder "RX" bewertet.

Darüber hinaus zeigt das Funkbedienelement 12a dem jeweiligen Lotsen 1a jeweils Lotsen-Kontrollfelder 122 für die anderen denselben gemeinsamen Luftraum kontrollierenden Lotsen 1b, 1c. Diese Lotsen-Kontrollfelder 122 können auch angewählt werden, um mit den betreffenden Lotsen 1b, 1c in Sprachverbindung zu treten. Die von den anderen Lotsen 1b, 1c kontrollierten Luftfahrzeuge 4D, 4E können vom jeweiligen Lotsen 1a nicht direkt kontaktiert werden.

Im oberen linken Bereich des Funkbedienelements 12a befindet sich ein Übernahme-Kontrollfeld 123, das Luftfahrzeuge im Nahebereich 54 des gemeinsam kontrollierten Luftraums 50 darstellt und dem Lotsen 1a die Übernahme der Kontrolle über dieses Luftfahrzeug 4A ermöglicht, sobald es in den gemeinsam kontrollierten Luftraum 50 gelangt.

Schließlich befinden sich im oberen rechten Bereich des Funkbedienelements 12a Kommunikationskontrollfelder 124, mit denen der jeweilige Lotse unmittelbar mit dem den jeweiligen benachbarten Luftraum 52, 53 kontrollierenden Lotsen 2, 3 in Sprachverbindung treten kann.

Das Radarbedienelement 13a, 13b, 13c, zeigt dem Lotsen 1a, 1b, 1c jeweils die Position der einzelnen Luftfahrzeuge 4A-4G an. Dabei wird für jedes der Luftfahrzeuge 4A-4G jeweils eine individuelle Kennung auf dem Radarbild als Symbol dargestellt, beispielsweise werden die Kennung des Luftfahrzeugs sowie andere flugrelevante Daten neben dem Symbol, des jeweiligen Luftfahrzeugs angezeigt. Zur Vereinfachung der Abbildung werden in **Fig. 3** für die einzelnen Luftfahrzeuge 4A-4G entsprechend die Symbole A-G verwendet, dh die Position des Luftfahrzeuges 4A wird durch das Symbol "A" markiert, die Position des Luftfahrzeuges 4B wird durch das Symbol "B" usw.

Um eine Sprachkommunikation zwischen dem Lotsen 1a, 1b, 1c und dem von ihm kontrollierten Luftfahrzeug 4D-4G zu ermöglichen, wird die Position der einzelnen Luftfahrzeuge 4D-4G innerhalb des betreffenden Luftraums erfasst. Dies kann beispielsweise dadurch geschehen, dass aufgrund der Übertragung der Radarkennung durch die Luftfahrzeuge 4D-4G an eine Radarstation die betreffende Position des Luftfahrzeugs 4A-4G in Kombination mit der Kennung des Luftfahrzeugs 4A-4G von dieser Radarstation aus ermittelt wird und an die Sprachvermittlungseinheit 20 übertragen wird. Die Radarstation bildet in diesem Fall eine Positionsbestimmungseinheit 6, die dazu ausgebildet ist, die Position der einzelnen Luftfahrzeuge 4A-4G zu ermitteln. Die einzelnen Positionsinformationen werden einer Lokalisierungseinheit 21 übermittelt. Diese verfügt über eine digitale Karte der einzelnen Abdeckungsbereiche 310a-310e; 320, 330, die für jeden Punkt innerhalb des Luftraums 50 angibt, innerhalb welchen Abdeckungsbereichs 310a-310e; 320, 330 sich dieser Punkt befindet. Ist die genaue Position eines Luftfahrzeugs 4D-4G aufgrund der Radarmessung z.B. Sekundärradarmessung, bekannt, ist es der Lokalisierungseinheit 21 ohne weiteres auch möglich, eine Sende- und Empfangsanlage 31a-31e; 32, 33 zu ermitteln, über die mit den betreffenden Luftfahrzeug 4D-4G eine Sprachkommunikation aufgenommen werden kann. Die Lokalisation der einzelnen Luftfahrzeuge 4D-4G braucht nicht notwendigerweise über Sekundärradar vorgenommen werden. Es stehen darüber hinaus auch eine Vielzahl anderer Möglichkeiten zur Verfügung, wie die betreffende Position eines 4D-4G geortet werden kann. Für das Funktionieren der Erfindung ist es nicht wesentlich, auf welche Art die Lokalisation der einzelnen Luftfahrzeuge 4D-4G vorgenommen wird, solange letztendlich für die betreffenden Luftfahrzeuge 4D-4G bekannt ist, an welcher Position diese sich befinden. Die konkrete Zuordnung (Tabelle 2) zwischen Luftfahrzeugen 4A-4G und Sende- und Empfangsanlagen 31a-31e; 32, 33 überträgt die Lokalisierungseinheit 21 an die Sprachvermittlungseinheit 20.

**Tabelle 2: Zuordnung zwischen Luftfahrzeugen und Sende- und Empfangsanlagen**

| Sende- und Empfangseinheit | Luftfahrzeug |
|---|---|
| 31b | 4E |
| 31a | 4D |
| 31e | 4G |
| 31a | 4F |

Für den Fall, dass ein Lotse 1a eine Sprachmitteilung TX an ein ihm zugewiesenes Luftfahrzeug 4F abgeben möchte, wird die Sprachmitteilung TX an diejenige Sende- und Empfangsanlage 31a übermittelt, innerhalb deren Abdeckungsbereich 310a sich das betreffende Luftfahrzeug 4F befindet. Zu diesem Zweck wählt der Lotse 1a das Luftfahrzeug-Kontrollfeld 121 des betreffenden Luftfahrzeugs 4F, mit dem er in Kontakt treten möchte, auf seinem Funkbedienelement 12a.

Sofern er das betreffende Luftfahrzeug 4D-4G mittels des Funkbedienelements 12a, 12,b, 12c anwählt, wird eine entsprechende Kommunikationsverbindung des Lotsen 1a, 1b, 1c über die Sprachvermittlungseinheit 20 zu der Sende- und Empfangsanlage 31a-31e; 32, 33 aufgebaut, innerhalb deren Abdeckungsbereich 310a-310e; 320, 330 sich das betreffende Luftfahrzeug 4D-4G befindet.

Alternativ besteht auch die Möglichkeit, dass er das Luftfahrzeug 4D-4G über das Radarbedienelement 13a, 13b, 13c auswählen kann. Er sieht auf dem Radarbedienelement 13a, 13b, 13c sämtliche der im Luftraum 50 befindlichen Luftfahrzeuge 4D-4G sowie - soweit entsprechende Daten verfügbar sind - auch die Position von Luftfahrzeugen 4A-4C in benachbarten Lufträumen 52, 53 - entsprechend ihrer Position als Symbol A, B, C, D, E, F, G dargestellt. Darüber hinaus wird auch dargestellt, ob das betreffende Luftfahrzeug 4D-4G vom jeweiligen Lotsen 1a konkret kontrolliert wird. Die Symbole F, G von dem Lotsen 1a kontrollierten Luftfahrzeugen 4f, 4g können in diesem Fall anders aussehen als die Symbole A, B, C, D, E der nicht vom jeweiligen Lotsen 1a kontrollierten Luftfahrzeuge 4A-4E.

Wählt der Lotse 1a, das betreffende Symbol F des Luftfahrzeugs 4F, 4G auf dem Radarbedienelement 13a, z.B. durch Anklicken per Maus oder durch Antippen auf einem Touch-Screen, aus, so wird aufgrund einer Verbindung zwischen dem Radarbedienelement 13a und dem Funkbedienelement 12a eine Sprachverbindung zwischen dem Lotsen 1a und mit dem jeweiligen Luftfahrzeug 4F aufgebaut. Es wird anhand der bereits ermittelten Zuordnungen geprüft, innerhalb welchen Abdeckungsbereichs 310a-310e; 320, 330 einer Sende- und Empfangsanlage 31a-31e; 32, 33 sich das betreffende Luftfahrzeug 4F befindet und eine Sprachverbindung mit der betreffende Sende- und Empfangsanlage 31a hergestellt. Diese ausgewählte Sende- und Empfangsanlage 31a überträgt die abgegebene Sprachmitteilung TX an das jeweilige Luftfahrzeug 4F.

Damit der Lotse 1a mit, sämtlichen ihm zugeordneten Luftfahrzeugen 4F, 4G in Sprachverbindung steht, ist es auch erforderlich, dass ihm von den Luftfahrzeugen 4F, 4G abgegebene und von den Sende- und Empfangsanlagen 31a, 31e empfangene Sprachmitteilungen RX auch zugehen. Für jeden der Lotsen 1a, 1b, 1c wird dabei separat ermittelt, in den Abdeckungsbereichen 310a-310e welcher Sende- und Empfangsanlagen 31a-31e sich Luftfahrzeuge 4D-4G befinden, die dem jeweiligen Lotsen 1a, 1b, 1c, 1d konkret zugeordnet sind. Hierfür wird eine Zuordnungstabelle (Tabelle 3) erstellt, die angibt, zu welchem Lotsen 1a, 1b, 1c einlangende Informationen welcher Sende- und Empfangsanlagen 31a-31e gelangen sollen. Diese Zuordnungstabelle kann anhand der vorstehend genannten Tabellen 1, 2 erstellt werden. Im konkreten Fall liegt eine Zuordnung wie folgt vor:

**Tabelle 3: Zuordnung zwischen Sende- und Empfangseinheiten und Lotsen beim Empfang von Funkmitteilungen von Luftfahrzeugen**

| Sende- und Empfangsanlage | Lotse |
|---|---|
| 31a | 1a, 1c |
| 31b | 1b |
| 31c | - |
| 31d | - |
| 31e | 1a |

Sämtliche dieser Sende- und Empfangsanlagen 31a-31e, die mit einem dem Lotsen 1a, 1b, 1c zugeordneten Luftfahrzeug 4D-4G in Verbindung stehen, übermitteln die bei ihnen einlangenden Sprachmitteilungen RX an den betreffenden Lotsen 1a, 1b, 1c. Dabei kann es durchaus vorkommen, dass der Lotse 1a auch Sprachmitteilungen RX erhält, die von einem Luftfahrzeug 4D abgegeben werden, die sich ebenfalls innerhalb eines Abdeckungsbereichs 310a befinden, ihm jedoch nicht zugeordnet sind. Gegebenenfalls können Sprachmitteilungen RX, die von solchen Luftfahrzeugen stammen, die nicht dem jeweiligen Lotsen 1a, 1b, 1c zugeordnet sind, entsprechend ihrer Kennung oder aufgrund anderer Algorithmen ausgefiltert und an den betreffenden Lotsen 1a, 1b, 1c nicht weitergeleitet werden.

Eine weitere Möglichkeit, Sprachmeldungen von vom jeweiligen Lotsen 1a nicht kontrollierten Luftfahrzeugen 4D auszufiltern oder zu unterdrücken, besteht darin, die von einem Luftfahrzeug 4D abgegebene Sprachfunkmeldung RX an zwei unterschiedlichen Standorten zu erfassen und mittels Peilungsinformationen die genaue Position des Luftfahrzeugs 4D zu ermitteln. Diese Position wird an die Sprachvermittlungseinheit 20 mit übertragen. Die Sprachvermittlungseinheit 20 vergleicht anschließend diese Position des Luftfahrzeugs 4D mit der von der Positionsermittlungseinheit 6 ermittelten Position und leitet die Sprachfunkmeldung RX nur dann weiter, wenn die mittels Peilung ermittelte Position einer Radarposition eines von dem betreffenden Lotsen kontrollierten Luftfahrzeugs übereinstimmt.

Um eine laufend aktuelle Sprachkommunikation zwischen dem Lotsen 1a, 1b, 1c und den ihm zugewiesenen Luftfahrzeugen 4D-4G zu gewährleisten, kann die Lokalisation der einzelnen Luftfahrzeuge 4D-4G innerhalb vorgegebener Zeiträume erneut durchgeführt werden. Derartige Aktualisierungen der Position der Luftfahrzeuge können beispielsweise in Abständen von zwischen 1 Sekunde bis 20 Sekunden durchgeführt werden. Sofern die Überlappungsbereiche 311ab, 311bc, 311cd, 311de der Abdeckungsbereiche 310a-310e; 320, 330 der einzelnen Sende- und Empfangsanlagen 31a-31e; 32, 33 ausreichend groß sind, kann durch entsprechende Auswahl eines Aktualisierungsintervalls gewährleistet werden, dass jeder Lotse 1a, 1b, 1c zu jeder Zeit mit dem ihn zugeführten Luftfahrzeugen 4D-4G in Kommunikationsverbindung steht.

Je größer die Überlappungsbereiche 311ab, 311bc, 311cd, 311de sind, desto größer kann auch das betreffende Aktualisierungsintervall gewählt werden, wobei die Aktualisierungsintervalle typischerweise so gewählt werden, dass ein Luftfahrzeug, das sich innerhalb des Abdeckungsbereichs einer Sende- und Empfangsanlage, jedoch nicht in einem Überlappungsbereich befindet und sich maximal zulässiger Geschwindigkeit bewegt, nach Ablauf des Aktualisierungsintervalls noch zumindest im Abdeckungsbereich befindet.

Verlässt das Luftfahrzeug einen Abdeckungsbereich 310a-310e einer Sende- und Empfangsanlage 31a-31e im gemeinsam überwachten Luftraum 50, so wird die Kommunikationshardware des Luftfahrzeugs an die Gegebenheiten der jeweiligen Sende- und Empfangsanlage 31a-31e angepasst. Dies kann entweder durch eine speziell angepasste Kommunikationshardware des Luftfahrzeugs erfolgen oder aber durch konkrete Mitteilung durch den Lotsen oder durch Abgabe einer automatisch erstellten Sprachmeldung durch Sprachvermittlungseinheit 20. Diese Sprachmeldung kann das Luftfahrzeug insbesondere auffordern, die für den Sprachfunk verwendete Frequenz an die Sende- und Empfangsanlage 31a-31e anzupassen.

Da für denselben Luftraum 50 mehrere Lotsen 1a, 1b, 1c zuständig sind, kann auch Bedarf der Abstimmung unter den Lotsen bestehen. Dabei kann vorgesehen sein, dass ein erster Lotse 1a mit einem zweiten Lotsen 1c unmittelbar Kontakt aufnehmen möchte. Dies ist jedoch nur bedingt zielführend, da der erste Lotse 1a typischerweise nicht mit einem konkreten anderen Lotsen sprechen möchte, sondern mit einem zweiten Lotsen 1c, der für ein bestimmtes, für ihn bzw. sein Luftfahrzeug 4F relevantes bzw. gefährliches Luftfahrzeug 4D zuständig ist. Aus diesem Grund besteht bei einer bevorzugten Weiterbildung der Erfindung die Möglichkeit, dass der erste Lotse 1a über das Lotsen-Kontrollfeld 122 des Funkbedienelements 12a, den Losen 1c des betreffenden Luftfahrzeugs 4F konkret anwählt. Aufgrund der dem Sprachvermittlungssystem 20 bekannten und ausschließlichen Zuordnung einzelner Luftfahrzeuge 4D-4G zu Lotsen (Tabelle 1) kann eine unmittelbare Sprachverbindung zwischen dem ersten Lotsen 1a und einem zweiten Lotsen 1c, der für das ausgewählte Luftfahrzeug 4D zuständig ist bzw. diesem zugeordnet ist, erstellt werden. Sprachmitteilungen, die der erste Lotse 1a abgibt, werden unmittelbar an den zweiten Lotsen 1c übermittelt. Ebenso kann der zweite Lotse 1c nach Aufbau einer derartigen Verbindung Sprachmitteilungen an den ersten Lotsen 1a zurück übermitteln, sodass diese beiden Lotsen 1a, 1c sich über das Sprachmitteilungssystem, mit dem sie normalerweise mit den Luftfahrzeugen 4D-4G kommunizieren auch untereinander abstimmen können und kommunizieren können.

Eine weitere Möglichkeit, mit der vermieden wird, dass der erste Lotse 1a seinen Blick vom Radarbedienelement 13a abwendet, sieht vor, dass das betreffende Luftfahrzeug 4D, mit dessen zugeordneten zweiten Lotsen 1c der erste Lotse 1a kommunizieren möchte, über das Radarbedienelement 13a ausgewählt wird. Betätigt der erste Lotse 1a auf seinem Radarbedienelement 13a also das Symbol "D", ein es fremden, das heißt von einem anderen Lotsen 1c kontrollierten Luftfahrzeugs 4D, so wird eine Sprachverbindung über die Sprachvermittlungseinheit 20 unmittelbar zwischen den ersten Lotsen 1a und dem diesen Luftfahrzeug 4D zugeordneten zweiten Lotsen 1c hergestellt.

Sofern, wie dies im Stand der Technik üblich ist, ein Luftraum lediglich von einem einzigen Lotsen koordiniert wird, ist es auch ohne weiteres möglich, dass ein Lotse 2, 3, der einen benachbarten Luftraum 52, 53 kontrolliert, mit dem betreffenden Lotsen des gemeinsam kontrollierten Luftraum über ein Sprachvermittlungssystem Kontakt aufnimmt. Da im vorliegenden Fall eine Vielzahl möglicher Lotsen 1a, 1b, 1c als Gesprächspartner für den Lotsen 2, 3 eines benachbarten Luftraums 52, 53 zur Verfügung steht, ist im Folgenden dargestellt, wie die konkrete Auswahl eines Gesprächspartners für Lotsen 2, 3 benachbarter Lufträume 52, 53 vorgenommen werden kann.

Für den Fall, dass ein Luftfahrzeug 4A in den Nahebereich 54 des zu überwachenden Luftraums 50 gelangt, wird noch bevor dieses Luftfahrzeug 4a in den Luftraum 50 gelangt, eine Zuordnung vorgenommen, mit der vorgegeben wird, welcher der Lotsen 1a, das im Nahebereich 54 befindliche Luftfahrzeuge 4A kontrolliert, sobald es in den überwachten Luftraum 50 gelangt. Das betreffende Luftfahrzeug 4A wird dem jeweiligen Lotsen 1a in seinem Funkbedienelement 12a in Form eines Kontrollfelds 123 angezeigt, das vom Lotsen 1a bestätigt wird. Nach der Bestätigung wird das betreffende Luftfahrzeug durch ein Kontrollfeld 121 auf dem Funkbedienelement 12a dargestellt. Hierbei können unterschiedliche vorgegebene Kriterien eine Zuordnung ermöglichen. Daneben besteht auch die Möglichkeit, dass die Zuordnung durch einen vorgegebenen Lotsen 1a, 1b, 1c vorgenommen wird.

Befindet sich ein Luftfahrzeug 4A im Nahebereich 54 des zu überwachenden Luftraums 50 im benachbarten Luftraum 52 und langt gleichzeitig eine Sprachmitteilung eines diesen benachbarten Luftraum 52 überwachenden Lotsen 2 ein, so werden Sprachmitteilungen an denjenigen Lotsen 1a weitergeleitet, dem das jeweilige im Nahebereich 54 befindliche Luftfahrzeug 4A bereits zugewiesen ist.

Sofern sich - in den Fig. nicht dargestellt - im Nahebereich 54 mehrere Luftfahrzeuge befinden, die bereits unterschiedlichen Lotsen 1a, 1c zugewiesen sind, kann mittels der Sprachvermittlung 20 eine Konferenzschaltung ermöglicht werden, bei der der Lotse 2 des benachbarten Luftraums 52 mit beiden Lotsen 1a, 1c oder allen Lotsen 1a, 1b, 1c kommuniziert, denen die im Nahebereich befindlichen Luftfahrzeuge 4a, 4b zugewiesen sind.

Sofern sich im Nahebereich 54 kein Luftfahrzeug befindet, das an einen der Lotsen 1a, 1b, 1c zugewiesen ist, besteht die Möglichkeit, dass der Lotse 2 des jeweiligen benachbarten Luftraums 52 nach vorgegebenen Kriterien an einen vorgegebenen Lotsen 1a, 1b, 1c oder an alle der Lotsen 1a, 1b, 1c in Konferenzschaltung weitergeleitet wird.

Um zu vermeiden, dass Zuordnungen zwischen Lotsen und Luftfahrzeugen, die den Luftraum bereits verlassen haben, abgespeichert bleiben und bei späteren Wiedereintritt des Luftfahrzeugs in den Luftraum zu Konflikten führen, kann vorgesehen sein, dass für den Fall das ein Luftfahrzeug den überwachten Luftraum verlässt die Zuordnung des Luftfahrzeugs zu dem jeweiligen Lotsen gelöscht wird.

## Patentansprüche

1. Verfahren zur Vermittlung von Sprachkommunikation zwischen einer Anzahl von Lotsen (1a, 1b, 1c) und einer Anzahl von sich innerhalb desselben Luftraums (50) befindlichen Luftfahrzeugen (4D-4G),
a) wobei alle Lotsen über jeweils einen Lotsen-Arbeitsplatz (11a, 11b, 11c) verfügen, der an eine Sprachvermittlungseinheit (20) gekoppelt ist, und
b) wobei Sende- und Empfangsanlagen (31a-31e) zur drahtlosen, ***insbesondere terrestrischen,*** Übertragung von Sprechfunk an Luftfahrzeuge (4D-4G) vorhanden sind, die an die Sprachvermittlungseinheit (20) angekoppelt sind, wobei jede Sende- und Empfangsanlagen (31a-31e) jeweils einen vorgegebenen Abdeckungsbereich (310a-310e) innerhalb des Luftraums (50) aufweist, und
c) wobei die Luftfahrzeuge (4D-4G) innerhalb des Luftraums (50) jeweils mit zumindest einer der Sende- und Empfangsanlagen (31a-31e) in Verbindung stehen,
d) wobei die Lotsen (1a, 1b, 1c) den Luftraum (50) gemeinsam verwalten, wobei eine Zuordnung vorgenommen wird, mit der jedem der Lotsen (1a, 1b, 1c) jeweils eine Teilmenge der innerhalb des Luftraums (50) befindlichen Luftfahrzeuge (4D-4G) ausschließlich zugewiesen wird,
e) wobei eine Anzahl von Lotsen (1a, 1b, 1c) über eine Vielzahl von Sende- und Empfangsanlagen mit den Luftfahrzeugen (4D-4G) in Kommunikationsverbindung steht, die sich innerhalb des Luftraums 50 befinden, wobei jedem Lotsen (1a, 1b, 1c) Luftfahrzeuge (4D-4G) zugewiesen sind, die sich in unterschiedlichen Abdeckungsbereichen (310a-3109) von Sende- und Empfangsanlagen befinden, wobei sich in diesen Abdeckungsbereichen auch Luftfahrzeuge befinden können, die von anderen Lotsen geleitet werden, **dadurch gekennzeichnet, dass** es die Zuordnung eines Luftfahrzeugs zu einem Lotsen nicht erfordert, dass sich die einem Lotsen zugeordneten einzelnen Luftfahrzeuge (4D-4G) innerhalb des Abdeckungsbereichs einer bestimmten Sende- und Empfangsanlage (31a-31e) befinden,
f) dass die Position der Luftfahrzeuge (4D-4G) innerhalb des Luftraums (50) erfasst wird und festgestellt wird, im Abdeckungsbereich (310a-310e) welcher der Sende- und Empfangsanlagen (31a-31e) sich die einzelnen Luftfahrzeuge (4D-4G) befinden, und das betreffende Luftfahrzeug (4D-4G) dem jeweiligen Abdeckungsbereich (310a-310e) sowie der jeweiligen Sende- und Empfangsanlage (31a-31e) zugeordnet wird und diese Zuordnung an die Sprachvermittlungseinheit (20) weitergeleitet wird,
g) dass die Sprachvermittlungseinheit (20) für den Fall, dass einer der Lotsen (1a, 1b, 1c) eine Sprachmitteilung (TX) an ein ihm zugewiesenes Luftfahrzeug (4D-4G) abgibt, die Sprachmitteilung (TX) nur an die dem jeweiligen Luftfahrzeug (4D-4G) zugeordnete Sende- und Empfangsanlage (31a-31e) weiterleitet, und/oder
h) dass die Sprachvermittlungseinheit (20) für den Fall, dass eine Sende- und Empfangsanlage (31a-31e), eine Sprachmitteilung (RX) empfängt, die empfangene Sprachmitteilung (RX) an diejenigen Lotsen (1a, 1b, 1c) weiterleitet, denen zumindest ein Luftfahrzeug (4D-4G) zugewiesen ist, das sich im Abdeckungsbereich der betreffenden Sende- und Empfangsanlage (31a-31e) befindet.

2. Verfahren nach Anspruch 1, **dadurch gekennzeichnet,**
- **dass** die Position der Luftfahrzeuge (4D-4G) innerhalb des Luftraums nach einer vorgegebenen Zeitspanne neu erfasst wird und erneut festgestellt und aktualisiert wird, innerhalb welchen Abdeckungsbereichs (310a-310e) sich das Luftfahrzeug (4D-4G) befindet, und das betreffende Luftfahrzeug (4D-4G) erneut dem jeweiligen Abdeckungsbereich (310a-310e) zugeordnet wird.

3. Verfahren nach Anspruch 1 oder 2, **dadurch gekennzeichnet, dass** der Lotse (1a, 1b, 1c) ein ihm zugewiesenes Luftfahrzeug (4D-4G) für die Übermittlung einer Sprachmitteilung (TX) auswählt, indem
- ihm auswählbare Kontrollfelder (121) der ihm zugewiesenen Luftfahrzeuge (4D-4G) auf einem Funkbedienelement (12a, 12b, 12c) dargestellt werden und er das betreffende Luftfahrzeug (4D-4G) mittels der Kontrollfelder (121) auswählt, oder
- ihm auf einem Radarbedienelement (13a, 13b, 13c) die im Luftraum (50) befindlichen Luftfahrzeuge (4D-4G) entsprechend ihrer Position als Symbol (A, B, C, D, E, F, G) dargestellt sind und er durch Auswahl einer Position dasjenige Symbol (A, B, C, D, E, F, G) eines Luftfahrzeugs (4D-4G) auswählt, das sich an der betreffenden Position befindet, wobei gegebenenfalls eine Sprachverbindung nur dann erfolgt, wenn das ausgewählte Luftfahrzeug (4D-4G) dem auswählenden Lotsen (1a, 1b, 1c) zugewiesen ist.

4. Verfahren nach einem der vorangehenden Ansprüche, **dadurch gekennzeichnet,**
- **dass** ein erster den Luftraum (50) überwachenden Lotsen (1a, 1b, 1c) einen zweiten der denselben Luftraum (50) überwachenden Lotsen (1a, 1b, 1c) für die Übermittelung einer Sprachmitteilung auswählt,
a) indem der erste Lotse (1a, 1b, 1c) ein vom zweiten Lotsen (1a, 1b, 1c) überwachtes Luftfahrzeug (4D-4G), insbesondere auf dem Radarbedienelement (13a, 13b, 13c), anwählt und der zweite Lotse (1a, 1b, 1c) entsprechend der Zuordnung im Sprachvermittlungssystem (20) anhand des ausgewählten Luftfahrzeugs (4D-4G) ermittelt wird und für die Übermittlung der Sprachmitteilung ausgewählt wird, oder
b) indem dem ersten Lotsen (1a, 1b, 1c) sämtliche denselben Luftraum überwachenden Lotsen (1a, 1b, 1c) sowie die diesen zugeordneten Luftfahrzeuge (4D-4G) an einem Funkbedienelement (12a, 12b, 12c) angezeigt werden und der erste Lotse (1a, 1b, 1c) entweder den zweiten Lotsen (1a, 1b, 1c) direkt auswählt oder ein diesem zugeordnetes Luftfahrzeug (4D-4G) auswählt und der zweite Lotse (1a, 1b, 1c) aufgrund der Zuordnung zum ausgewählten Luftfahrzeug (4D-4G) ermittelt wird, und
- **dass** der erste Lotse (1a, 1b, 1c) dem zweiten Lotsen (1a, 1b, 1c) anschließend die Sprachmitteilung übermittelt.

5. Verfahren nach einem der vorangehenden Ansprüche, **dadurch gekennzeichnet, dass** für den Fall, dass ein Luftfahrzeug (4D-4G) in den Nahebereich (54) des zu überwachenden Luftraums (50) gelangt, das betreffende Luftfahrzeug (4D-4G) einem der Lotsen nach vorgegebenen Kriterien zugeordnet wird.

6. Verfahren nach Anspruch 5, **dadurch gekennzeichnet, dass** eine Sprachmitteilung eines einen benachbarten Luftraum (52, 53) überwachenden Lotsen (2, 3) an denjenigen oder diejenigen Lotsen (1a, 1b, 1c) weitergeleitet wird, dem oder denen diese Luftfahrzeuge (4D-4G) zugewiesen wurden, die sich im Nahebereich (54) des zu überwachenden Luftraums (50) im benachbarten Luftraum (52, 53) befinden,
- wobei bei einer Mehrzahl von unterschiedlichen Lotsen (1a, 1b, 1c) zugeordneten Luftfahrzeugen (4D-4G) gegebenenfalls eine Konferenzschaltung zwischen diesen Lotsen und dem Lotsen (2, 3) des benachbarten Luftraums (52, 53) eingerichtet wird.

7. Verfahren nach einem der vorangehenden Ansprüche, **dadurch gekennzeichnet, dass** eine Sprachmitteilung eines einen benachbarten Luftraum (52, 53) überwachenden Lotsen (2, 3), wenn sich in dem jeweiligen benachbarten Luftraum (52, 53) kein zugewiesenes Luftfahrzeug befindet, an alle oder einen vorgegebenen Lotsen (1a, 1b, 1c) des zu überwachenden Luftraums (50) weitergeleitet wird.

8. Verfahren nach einem der vorangehenden Ansprüche, **dadurch gekennzeichnet, dass** für den Fall, dass ein Luftfahrzeug (4D-4G) den überwachten Luftraum (50) verlässt, die Zuordnung des Luftfahrzeugs (4D-4G) zu dem jeweiligen Lotsen (1a, 1b, 1c) gelöscht wird.

9. Anordnung zur Vermittlung von Sprachkommunikation zwischen einer Anzahl von Lotsen (1a, 1b, 1c) und einer Anzahl von sich innerhalb desselben Luftraums (50) befindlichen Luftfahrzeugen (4D-4G), umfassend
a) eine Sprachvermittlungseinheit (20)
b) für jeden Lotsen jeweils einen Lotsen-Arbeitsplatz (11a, 11b, 11c), der an eine Sprachvermittlungseinheit (20) gekoppelt ist und
c) Sende- und Empfangsanlagen (31a-31e) zur drahtlosen, ***insbesondere terrestrischen,*** Übertragung von Sprechfunk an Luftfahrzeuge, die an die Sprachvermittlungseinheit (20) angekoppelt sind, wobei jede Sende- und Empfangsanlagen (31a-31e) jeweils einen vorgegebenen Abdeckungsbereich (310a-310e) innerhalb des Luftraums (50) aufweist und
d) dass eine Zuordnungseinheit vorgesehen ist, die jedem der Lotsen (1a, 1b, 1c) jeweils eine Teilmenge der innerhalb des Luftraums (50) befindlichen Luftfahrzeuge (4D-4G) ausschließlich zuweist,
e) wobei eine Anzahl von Lotsen (1a, 1b, 1c) über eine Vielzahl von Sende- und Empfangsanlagen mit den Luftfahrzeugen (4D-4G) in Kommunikationsverbindung steht, die sich innerhalb des Luftraums 50 befinden, wobei die Zuordnungseinheit jedem Lotsen (1a, 1b, 1c) Luftfahrzeuge (4D-4G) zuweist, die sich in unterschiedlichen Abdeckungsbereichen (310a-310e) von Sende- und Empfangsanlagen (31a-31e) befinden, wobei sich in diesen Abdeckungsbereichen (310a-310e) auch Luftfahrzeuge (4D, 4F) befinden können, die von anderen Lotsen (1a, 1b, 1c) geleitet werden, **dadurch gekennzeichnet, dass** es die Zuordnung eines Luftfahrzeugs zu einem Lotsen nicht erfordert, dass sich die einem Lotsen zugeordneten einzelnen Luftfahrzeuge (4D-4G) innerhalb des Abdeckungsbereichs einer bestimmten Sende- und Empfangsanlage (31a-31e) befinden,
f) dass eine Positionsbestimmungseinheit (6) vorgesehen ist, die die Position der Luftfahrzeuge (4D-4G) innerhalb des Luftraums (50) erfasst,
g) dass eine Lokalisierungseinheit (21) vorgesehen ist, die aufgrund der von der Positionsbestimmungseinheit (6) erfassten Position für die einzelnen Luftfahrzeuge (4D-4G) feststellt, im Abdeckungsbereich (310a-310e) welcher der Sende- und Empfangsanlagen (31a-31e) sich die einzelnen Luftfahrzeuge (4D-4G) befinden, und die einzelnen Luftfahrzeuge (4D-4G) dem jeweiligen Abdeckungsbereich (310a-310e) sowie der jeweiligen Sende- und Empfangsanlage (31a-31e) zuordnet, und diese Zuordnung an die Sprachvermittlungseinheit (20) weiterleitet,
h) dass die Sprachvermittlungseinheit (20) dazu ausgebildet ist, für den Fall, dass einer der Lotsen (1a, 1b, 1c) eine Sprachmitteilung (TX) an ein ihm zugewiesenes Luftfahrzeug (4D-4G) abgibt, die Sprachmitteilung (TX) an die dem jeweiligen Luftfahrzeug (4D-4G) zugeordnete Sende- und Empfangsanlage (31a-31e) weiterzuleiten, und
i) dass die Sprachvermittlungseinheit (20) dazu ausgebildet ist, für den Fall, dass eine Sende- und Empfangsanlage (31a-31e), eine Sprachmitteilung (RX) empfängt, die empfangene Sprachmitteilung (RX) diejenigen Lotsen (1a, 1b, 1c) weiterzuleiten, denen zumindest ein Luftfahrzeug (4D-4G) zugewiesen ist, das sich im Abdeckungsbereich der betreffenden Sende- und Empfangsanlage (31a-31e) befindet.

10. Anordnung nach Anspruch 9, **dadurch gekennzeichnet, dass** die Positionsbestimmungseinheit (6) die Position der Luftfahrzeuge (4D-4G) innerhalb des Luftraums nach einer vorgegebenen Zeitspanne neu erfasst und an die Lokalisierungseinheit (21) weiterleitet, wobei die Lokalisierungseinheit (21) dazu ausgebildet ist, bei Einlangen neuer Positionen von Luftfahrzeugen erneut zu ermitteln, innerhalb welchen Abdeckungsbereichs (310a-310e) sich das Luftfahrzeug (4D-4G) befindet, und das betreffende Luftfahrzeug (4D-4G) erneut dem jeweiligen Abdeckungsbereich (310a-310e) zuzuordnen und diese Zuordnung an die Sprachvermittlungseinheit (20) weiterzuleiten.

11. Anordnung nach Anspruch 9 oder 10, **dadurch gekennzeichnet, dass** für jeden Lotsen (1a, 1b, 1c) jeweils ein Funkbedienelement (12a, 12b, 12c) und/oder Radarbedienelement (13a, 13b, 13c) vorgesehen ist, das dem Lotsen (1a, 1b, 1c) die Auswahl eines ihm zugewiesenen Luftfahrzeugs (4D-4G) für die Übermittlung einer Sprachmitteilung (TX) anbietet,
- indem das Funkbedienelement (12a, 12b, 12c) Anzahl von Kontrollfeldern (121) für die ihm zugewiesenen Luftfahrzeuge (4D-4G) darstellt und dem Lotsen die Auswahl des betreffenden Luftfahrzeugs (4D-4G) durch Anwahl des Kontrollfelds (121) erlaubt, oder
- indem das Radarbedienelement (13a, 13b, 13c) die im Luftraum (50) befindlichen Luftfahrzeuge (4D-4G) entsprechend ihrer Position als Symbol (A, B, C, D, E, F, G) darstellt und dem Lotsen durch Auswahl einer Position desjenigen Symbols (A, B, C, D, E, F, G) eines Luftfahrzeugs (4D-4G) erlaubt, das sich an der betreffenden Position befindet, wobei gegebenenfalls das Radarbedienelement eine Zuordnung nur dann vornimmt, wenn das ausgewählte Luftfahrzeug (4D-4G) dem auswählenden Lotsen (1a, 1b, 1c) zugewiesen ist.

12. Anordnung nach einem der Ansprüche 9 bis 11, **dadurch gekennzeichnet, dass** die Sprachvermittlungseinheit (20) auf Anfrage eines ersten den Luftraum (50) überwachenden Lotsen eine Kommunikationsverbindung mit einem zweiten denselben Luftraum (50) überwachenden Lotsen (1a, 1b, 1c) zum Austausch und zur Übermittelung von Sprachmitteilungen aufbaut,
a) wobei das Radarbedienelement (12a, 12b, 12c) dem ersten Lotsen (1a, 1b, 1c) die von den übrigen denselben Luftraum überwachenden Lotsen (1a, 1b, 1c) überwachten Luftfahrzeuge (4D-4G) darstellt und zur Auswahl anbietet, und
die Sprachvermittlungseinheit (20) bei Auswahl eines entsprechend der vorgenommenen Zuordnung von einem zweiten Lotsen (1a, 1b, 1c) überwachten Luftfahrzeugs die Kommunikationsverbindung zwischen dem ersten und dem zweiten Lotsen aufbaut, oder
b) wobei das Radarbedienelement (13a, 13b, 13c) dem ersten Lotsen (1a, 1b, 1c) die den übrigen Lotsen zugeordneten Luftfahrzeuge (4D-4G) entsprechend ihrer Position als Symbole anzeigt und zur Anwahl zur Verfügung hält und
die Sprachvermittlungseinheit (20) bei Auswahl eines entsprechend der vorgenommenen Zuordnung von einem zweiten Lotsen (1a, 1b, 1c) überwachten Luftfahrzeugs die Kommunikationsverbindung zwischen dem ersten und dem zweiten Lotsen aufbaut.

13. Anordnung nach einem der Ansprüche 9 bis 12, **dadurch gekennzeichnet, dass** die Zuordnungseinheit für den Fall, dass ein Luftfahrzeug (4D-4G) in den Nahebereich (54) des zu überwachenden Luftraums (50) gelangt, das betreffende Luftfahrzeug (4D-4G) einem der Lotsen nach vorgegebenen Kriterien zuordnet.

14. Anordnung nach Anspruch 13, **dadurch gekennzeichnet, dass** die Sprachvermittlungseinheit (20) eine Sprachmitteilung eines einen benachbarten Luftraum (52, 53) überwachenden Lotsen (2, 3) an denjenigen oder diejenigen Lotsen (1a, 1b, 1c) weiterleitet, dem oder denen diese Luftfahrzeuge (4D-4G) zugewiesen sind, die sich im Nahebereich (54) des zu überwachenden Luftraums (50) im benachbarten Luftraum (52, 53) befinden,
- wobei die Sprachvermittlungseinheit (20) bei einer Mehrzahl von unterschiedlichen Lotsen (1a, 1b, 1c) zugeordneten Luftfahrzeugen (4D-4G) gegebenenfalls eine Konferenzschaltung zwischen diesen Lotsen und dem Lotsen (2, 3) des benachbarten Luftraums (52, 53) einrichtet.

15. Anordnung nach einem der Ansprüche 9 bis 13, **dadurch gekennzeichnet, dass** die Sprachvermittlungseinheit (20) eine Sprachmitteilung eines einen benachbarten Luftraum (52, 53) überwachenden Lotsen (2, 3), wenn sich in dem jeweiligen benachbarten Luftraum (52, 53) kein zugewiesenes Luftfahrzeug befindet, an alle oder einen vorgegebenen Lotsen (1a, 1b, 1c) des zu überwachenden Luftraums (50) weiterleitet.

16. Anordnung nach einem der Ansprüche 9 bis 14, **dadurch gekennzeichnet, dass** die Zuordnungseinheit für den Fall, dass ein Luftfahrzeug (4D-4G) den überwachten Luftraum (50) verlässt, die Zuordnung des Luftfahrzeugs (4D-4G) zu dem jeweiligen Lotsen (1a, 1b, 1c) löscht.

## Claims

1. Method for transferring voice communication between a number of air-traffic controllers (1a, 1b, 1c) and a number of aircraft (4D-4G) located within the same airspace (50),
a) wherein all air-traffic controllers have respectively one air-traffic controller workstation (11a, 11b, 11c) which is coupled to a voice transferring unit (20), and
b) wherein transmission and receiving systems (31a-31e) are present for the wireless, ***in particular terrestrial**,* transmission of voice radio to aircraft (4D-4G) which are coupled to the voice transferring unit (20), wherein each transmission and receiving system (31a-31e) has respectively one predetermined coverage area (310a-310e) within the airspace (50), and
c) wherein the aircraft (4D-4G) within the airspace (50) are in connection respectively with at least one of the transmission and receiving systems (31a-31e),
d) wherein the air-traffic controllers (1a, 1b, 1c) administrate the airspace (50) together, wherein an assignment is undertaken with which in each case a subset of the aircraft (4D-4G) located within the airspace (50) is assigned exclusively to each of the air-traffic controllers (1a, 1b, 1c),
e) wherein a number of air-traffic controllers (1a, 1b, 1c) is in communicative connection with the aircraft (4D-4G), which are located within the airspace 50, via a multiplicity of transmission and receiving systems,
wherein to each air-traffic controller are assigned aircraft (4D-4G) which are located in different coverage areas (310a-310e) of transmission and receiving systems, wherein also aircraft can be located in these coverage areas which are guided by other air-traffic controllers, **characterised in that** the assignment of an aircraft to an air-traffic controller does not require that the individual aircraft (4D-4G) assigned to an air-traffic controller are located within the coverage area of a specific transmission and receiving system (31a-31e),
f) that the position of the aircraft (4D-4G) within the airspace (50) is detected and it is established to which of the transmission and receiving systems (31a-31e) the coverage area (310a-310e) belongs in which the individual aircraft (4D-4G) are located, and the aircraft (4D-4G) concerned is assigned to the respective coverage area (310a-310e) and to the respective transmission and receiving system (31a-31e) and this assignment is forwarded to the voice transferring unit (20),
g) that for the case that one of the air-traffic controllers (1a, 1b, 1c) submits a voice message (TX) to an aircraft (4D-4G) assigned to them, the voice transferring unit (20) forwards the voice message (TX) only to the transmission and receiving system (31a-31e) assigned to the respective aircraft (4D-4G), and/or
h) that for the case that a transmission and receiving system (31a-31e) receives a voice message (RX), the voice transferring unit (20) forwards the received voice message (RX) to those air-traffic controllers (1a, 1b, 1c) to which at least one aircraft (4D-4G) is assigned which is located in the coverage area of the transmission and receiving system (31a-31e) concerned.

2. Method according to claim 1, **characterised in**
- **that** the position of the aircraft (4D-4G) within the airspace is detected anew after a predetermined period of time and it is determined and actualised anew, within which coverage area (310a-310e) the aircraft (4D-4G) is located, and the aircraft (4D-4G) concerned is assigned to the respective coverage area (310a-310e).

3. Method according to claim 1 or 2, **characterised in that** the air-traffic controller (1a, 1b, 1c) selects an aircraft (4D-4G) assigned to them for the transmission of a voice message (TX), **in that**
- selectable control panels (121) of the aircraft (4D-4G) assigned to them are displayed on a radio control element (12a, 12b, 12c) and they select the aircraft (4D-4G) concerned by means of the control panels (121), or
- the aircraft (4D-4G) located in the airspace (50) are displayed on a radar control element (13a, 13b, 13c) corresponding to their position as a symbol (A, B, C, D, E, F, G) and, by selecting a position, they select the symbol (A, B, C, D, E, F, G) of an aircraft (4D-4G) which is located at the position concerned, wherein where appropriate a voice connection takes place only when the selected aircraft (4D-4G) is assigned to the selecting air-traffic controller (1a, 1b, 1c).

4. Method according to any of the preceding claims, **characterised in**
- **that** a first air-traffic controller (1a, 1b, 1c) monitoring the airspace (50) selects a second of the air-traffic controllers (1a, 1b, 1c) monitoring the same airspace (50) for the transmission of a voice message,
a) in that the first air-traffic controller (1a, 1b, 1c) selects an aircraft (4D-4G) monitored by the second air-traffic controller (1a, 1b, 1c), in particular on the radar operating element (13a, 13b, 13c), and the second air-traffic controller (1a, 1b, 1c) is determined corresponding to the assignment in the voice transferring system (20) on the basis of the selected aircraft (4D-4G) and is selected for the transmission of the voice message, or
b) in that all air-traffic controllers (1a, 1b, 1c) monitoring the same airspace as well as the aircraft (4D-4G) assigned to them are displayed to the first air-traffic controller (1a, 1b, 1c) on a radio control element (12a, 12b, 12c) and the first air-traffic controller (1a, 1b, 1c) either selects the second air-traffic controller (1a, 1b, 1c) directly or selects an aircraft (4D-4G) assigned to them and the second air-traffic controller (1a, 1b, 1c) is determined on the basis of the assignment to the selected aircraft (4D-4G), and
- **that** the first air-traffic controller (1a, 1b, 1c) subsequently transmits the voice message to the second air-traffic controller (1a, 1b, 1c).

5. Method according to any of the preceding claims, **characterised in that** for the case that an aircraft (4D-4G) comes into the vicinity (54) of the airspace (50) to be monitored, the aircraft (4D-4G) concerned is assigned to one of the air-traffic controllers according to predetermined criteria.

6. Method according to claim 5, **characterised in that** a voice message of an air-traffic controller (2, 3) monitoring an adjacent airspace (52, 53) is forwarded to the air-traffic controller or air-traffic controllers (1a, 1b, 1c) to whom these aircraft (4D-4G) are assigned which are located in the adjacent airspace (52, 53) in the vicinity (54) of the airspace (50) to be monitored,
- wherein when a plurality of aircraft (4D-4G) is assigned to different air-traffic controllers (1a, 1b, 1c), where appropriate a teleconference is set up between these air-traffic controllers and the air-traffic controller (2, 3) of the adjacent airspace (52, 53).

7. Method according to any of the preceding claims, **characterised in that** a voice message of an air-traffic controller (2, 3) monitoring an adjacent airspace (52, 53) is forwarded to all or to a predetermined air-traffic controller (1a, 1b, 1c) of the airspace (50) to be monitored when no assigned aircraft is located in the respective adjacent airspace (52, 53).

8. Method according to any of the preceding claims, **characterised in that** in the case that an aircraft (4D-4G) leaves the monitored airspace (50), the assignment of the aircraft (4D-4G) to the respective air-traffic controller (1a, 1b, 1c) is deleted.

9. System for transferring voice communication between a number of air-traffic controllers (1a, 1b, 1c) and a number of aircraft (4D-4G) located within the same airspace (50), comprising
a) a voice transferring unit (20)
b) for each air-traffic controller in each case one air-traffic controller workspace (11a, 11b, 11c) which is coupled to a voice transferring unit (20) and
c) transmission and receiving systems (31a-31e) for the wireless, ***in particular terrestrial**,* transmission of voice radio to aircraft which are coupled to the voice transferring unit (20), wherein each transmission and receiving system (31a-31e) has respectively one predetermined coverage area (310a-310e) within the airspace (50), and
d) that an assigning unit is provided which assigns respectively one subset of the aircraft (4D-4G) located within the airspace (50) exclusively to each of the air-traffic controllers (1a, 1b, 1c),
e) wherein a number of air-traffic controllers (1a, 1b, 1c) is in communicative connection with the aircraft (4D-4G), which are located within the airspace 50, via a multiplicity of transmission and receiving systems,
wherein the assigning unit assigns to each air-traffic controller (1a, 1b, 1c) aircraft (4D-4G) which are located in different coverage areas (310a-310e) of transmission and receiving systems (31a-31e), wherein also aircraft (4D, 4F) can be located in these coverage areas (310a-310e) which are guided by other air-traffic controllers (1a, 1b, 1c), **characterised in that**
the assignment of an aircraft to an air-traffic controller does not require that the individual aircraft (4D-4G) assigned to an air-traffic controller are located within the coverage area of a specified transmission and receiving system (31a-31e),
f) that a position specifying unit (6) is provided which detects the position of the aircraft (4D-4G) within the airspace (50),
g) that a localising unit (21) is provided which, on the basis of the position detected by the position specifying unit (6), determines to which of the transmission and receiving systems (31a-31e) the coverage area (310a-310e) belongs in which the individual aircraft (4D-4G) are located, and assigns the individual aircraft (4D-4G) to the respective coverage area (310a-310e) and to the respective transmission and receiving system (31a-31e), and forwards this assignment to the voice transferring unit (20),
h) that the voice transferring unit (20) is configured, in the case that one of the air-traffic controllers (1a, 1b, 1c) submits a voice message (TX) to an aircraft (4D-4G) assigned to them, to forward the voice message (TX) to the transmission and receiving system (31a-31e) assigned to the respective aircraft (4D-4G), and
i) that the voice transferring unit (20) is configured, in the case that a transmission and receiving system (31a-31e) receives a voice message (RX), to forward the received voice message (RX) to the air-traffic controllers (1a, 1b, 1c) to which at least one aircraft (4D-4G) is assigned which is located in the coverage area of the transmission and receiving system (31a-31e) concerned.

10. System according to claim 9, **characterised in that** the position specifying unit (6) records anew the position of the aircraft (4D-4G) within the airspace after a predetermined time period and forwards it to the localising unit (21), wherein the localising unit (21) is configured, when receiving new positions from aircraft, to determine anew within which coverage area (310a-310e) the aircraft (4D-4G) is located, and to assign the aircraft (4D-4G) concerned anew to the respective coverage area (310a-310e) and to forward this assignment to the voice transferring unit (20).

11. System according to claim 9 or 10, **characterised in that** for each air-traffic controller (1a, 1b, 1c) in each case one radio operating element (12a, 12b, 12c) and/or radar operating element (13a, 13b, 13c) is provided which offers to the air-traffic controller (1a, 1b, 1c) the selection of an aircraft (4D-4G) assigned to them for the transmission of a voice message (TX),
- **in that** the radio operating element (12a, 12b, 12c) displays number of control panels (121) for the aircraft (4D-4G) and permits the air-traffic control of the selection of the aircraft, or
- **in that** the radar operating element (13a, 13b, 13c) displays the aircraft (4D-4G) located in the airspace (50) corresponding to their position as a symbol (A, B, C, D, E, F, G) and permits the air-traffic controller by selecting a position of the symbol (A, B, C, D, E, F, G) of an aircraft (4D-4G) which is located at the position concerned, wherein where appropriate the radar operating element undertakes an assignment only when the selected aircraft (4D-4G) is assigned to the selecting air-traffic controller (1a, 1b, 1c).

12. System according to any of claims 9 to 11, **characterised in that** the voice transferring unit (20) on the request of a first air-traffic controller monitoring the airspace (50) establishes a communication connection, for exchanging and for transmitting voice messages, with a second air-traffic controller (1a, 1b, 1c) monitoring the same airspace (50),
a) wherein the radar operating element (12a, 12b, 12c) displays to the first air-traffic controller (1a, 1b, 1c) the aircraft (4D-4G) monitored by the remaining air-traffic controllers (1a, 1b, 1c) monitoring the same airspace, and offers them for selection, and at the selection of an aircraft monitored by a second air-traffic controller (1a, 1b, 1c) in correspondence with the undertaken assignment, the voice transferring unit (20) establishes the communicative connection between the first and the second air-traffic controller, or
b) wherein the radar operating element (13a, 13b, 13c) displays as symbols to the first air-traffic controller (1a, 1b, 1c) the aircraft (4D-4G) assigned to the remaining air-traffic controllers in accordance with their position, and keeps them available for selection and
at the selection of an aircraft monitored by a second air-traffic controller (1a, 1b, 1c) in correspondence with the undertaken assignment, the voice transferring unit (20) establishes the communicative connection between the first and the second air-traffic controller.

13. System according to any of claims 9 to 12, **characterised in that** for the case that an aircraft (4D-4G) comes into the vicinity (54) of the airspace (50) to be monitored, the assigning unit assigns the aircraft (4D-4G) concerned to one of the air-traffic controllers according to predetermined criteria.

14. System according to claim 13, **characterised in that** the voice transferring unit (20) forwards a voice message of an air-traffic controller (2, 3) monitoring an adjacent airspace (52, 53) to the air-traffic controller or air-traffic controllers (1a, 1b, 1c) to whom these aircraft (4D-4G) are assigned which are located in the adjacent airspace (52, 53) in the vicinity (54) of the airspace (50) to be monitored,
- wherein in the case of aircraft (4D-4G) being assigned to a plurality of different air-traffic controllers the voice transferring unit (20), where appropriate, sets up a teleconference between these air-traffic controllers and the air-traffic controller (2, 3) of the adjacent airspace (52, 53).

15. System according to any of claims 9 to 13, **characterised in that** the voice transferring unit (20) forwards a voice message of an air-traffic controller (2, 3) monitoring an adjacent airspace (52, 53) to all or one predetermined air-traffic controller(s) (1a, 1b, 1c) of the airspace (50) to be monitored, when no assigned aircraft is located in the respective adjacent airspace (52, 53).

16. System according to any of claims 9 to 14, **characterised in that** in the case that an aircraft (4D-4G) leaves the monitored airspace (50), the assigning unit deletes the assignment of the aircraft (4D-4G) to the respective air-traffic controller (1a, 1b, 1c).

## Revendications

1. Procédé de transmission de communication vocale entre un nombre de pilotes (1a, 1b, 1c) et un nombre d'aéronefs (4D-4G) se trouvant dans le même espace aérien (50),
a) dans lequel tous les pilotes disposent de respectivement un poste de travail de pilotes (11a, 11b, 11c) qui est couplé à une unité de transmission vocale (20), et
b) dans lequel des installations d'émission et de réception (31a-31e) sont présentes pour la transmission sans fil, **en particulier terrestre,** de radiotéléphonie aux aéronefs (4D-4G), qui sont couplés à l'unité de transmission vocale (20), dans lequel chaque installation d'émission et de réception (31a-31e) présente respectivement une zone de couverture (310a-310e) prédéfinie dans l'espace aérien (50), et
c) dans lequel les aéronefs (4D-4G) sont en liaison dans l'espace aérien (50) respectivement avec au moins une des installations d'émission et de réception (31a-31e),
d) dans lequel les pilotes (1a, 1b, 1c) gèrent ensemble l'espace aérien (50), dans lequel une association est entreprise, avec laquelle à chacun des pilotes (1a, 1b, 1c) est exclusivement attribuée respectivement une quantité partielle des aéronefs (4D-4G) se trouvant dans l'espace aérien (50),
e) dans lequel un nombre de pilotes (1a, 1b, 1c) est en liaison de communication par le biais d'une pluralité d'installations d'émission et de réception avec les aéronefs (4D-4G) qui se trouvent dans l'espace aérien (50),
dans lequel à chaque pilote (1a, 1b, 1c) sont attribués des aéronefs (4D-4G) qui se trouvent dans différentes zones de couverture (310a-310e) d'installations d'émission et de réception, dans lequel des aéronefs peuvent aussi se trouver dans ces zones de couverture, lesquels sont pilotés par d'autres pilotes, **caractérisé en ce qu'**il ne nécessite pas l'association d'un aéronef à un pilote, que les aéronefs (4D-4G) individuels associés à un pilote se trouvent dans la zone de couverture d'une installation d'émission et de réception (31a-31e) déterminée,
f) que la position des aéronefs (4D-4G) dans l'espace aérien (50) est détectée et constatée, dans la zone de couverture (310a-310e) de laquelle des installations d'émission et de réception (31a-31e) les aéronefs (4D-4G) individuels se trouvent, et l'aéronef (4D-4G) concerné est associé à la zone de couverture (310a-310e) respective ainsi qu'à l'installation d'émission et de réception (31a-31e) respective et cette association est transmise à l'unité de transmission vocale (20),
g) que l'unité de transmission vocale (20) pour le cas où un des pilotes (1a, 1b, 1c) envoie un message vocal (TX) à un aéronef (4D-4G) qui lui est attribué, transmet le message vocal (TX) seulement à l'installation d'émission et de réception (31a-31e) associée à l'aéronef (4D-4G) respectif, et/ou
h) que l'unité de transmission vocale (20) pour le cas où une installation d'émission et de réception (31a-31e), reçoit un message vocal (RX), transmet le message vocal (RX) reçu aux pilotes (1a, 1b, 1c) auxquels est attribué au moins un aéronef (4D-4G) qui se trouve dans la zone de couverture de l'installation d'émission et de réception (31a-31e) concernée.

2. Procédé selon la revendication 1, **caractérisé en ce**
- **que** la position des véhicules automobiles (4D-4G) est de nouveau détectée dans l'espace aérien après un intervalle prédéfini et est constatée et actualisée de nouveau, dans laquelle zone de couverture (310a-310e) se trouve l'aéronef (4D-4G), et l'aéronef (4D-4G) concerné est de nouveau associé à la zone de couverture (310a-310e) respective.

3. Procédé selon la revendication 1 ou 2, **caractérisé en ce que** le pilote (1a, 1b, 1c) sélectionne un aéronef (4D-4G) qui lui est attribué pour la transmission d'un message vocal (TX), **en ce que**
- des champs de commande (121) pouvant être sélectionnés des aéronefs (4D-4G) qui lui sont attribués lui sont représentés sur un élément de télécommande (12a, 12b, 12c) et il sélectionne l'aéronef concerné (4D-4G) au moyen des champs de commande (121), ou
- les aéronefs (4D-4G) se trouvant dans l'espace aérien (50) lui sont représentés selon leur position comme symbole (A, B, C, D, E, F, G) sur un élément de commande à radar (13a, 13b, 13c) et il sélectionne par sélection d'une position le symbole (A, B, C, D, E, F, G) d'un aéronef (4D-4G) qui se trouve au niveau de la position concernée, dans lequel une liaison vocale n'est éventuellement effectuée que lorsque l'aéronef sélectionné (4D-4G) est attribué au pilote sélectionnant (1a, 1b, 1c).

4. Procédé selon l'une quelconque des revendications précédentes, **caractérisé en ce**
- **qu'**un premier pilote (1a, 1b, 1c) surveillant l'espace aérien (50) sélectionne un second des pilotes (1a, 1b, 1c) surveillant le même espace aérien (50) pour la transmission d'un message vocal,
a) en ce que le premier pilote (1a, 1b, 1c) choisit un aéronef (4D-4G) surveillé par le second pilote (1a, 1b, 1c), en particulier sur l'élément de commande à radar (13a, 13b, 13c) et le second pilote (1a, 1b, 1c) est déterminé selon l'association dans le système de transmission vocal (20) à l'aide de l'aéronef (4D-4G) sélectionné et est sélectionné pour la transmission du message vocal, ou
b) en ce qu'au premier pilote (1a, 1b, 1c) sont affichés tous les pilotes (1a, 1b, 1c) surveillant le même espace aérien ainsi que les aéronefs (4D-4G) associés à ceux-ci au niveau d'un élément de radiocommande (12a, 12b, 12c) et le premier pilote (1a, 1b, 1c) sélectionne directement le second pilote (1a, 1b, 1c) ou sélectionne un aéronef (4D-4G) associé à celui-ci et le second pilote (1a, 1b, 1c) est déterminé en raison de l'association à l'aéronef sélectionné (4D-4G), et
- **que** le premier pilote (1a, 1b, 1c) transmet ensuite au second pilote (1a, 1b, 1c) le message vocal.

5. Procédé selon l'une quelconque des revendications précédentes, **caractérisé en ce que** pour le cas où un aéronef (4D-4G) parvient dans la zone proche (54) de l'espace aérien (50) à surveiller, l'aéronef (4D-4G) concerné est associé à un des pilotes selon des critères prédéfinis.

6. Procédé selon la revendication 5, **caractérisé en ce qu'**un message vocal d'un pilote (2, 3) surveillant un espace aérien (52, 53) contigu est transmis au ou aux pilotes (1a, 1b, 1c), auquel ou auxquels ces aéronefs (4D-4G) ont été attribués qui se trouvent dans la zone proche (54) de l'espace aérien (50) à surveiller dans l'espace aérien (52, 53) contigu,
- dans lequel pour des aéronefs (4D-4G) associés à une pluralité de pilotes différents (1a, 1b, 1c) éventuellement un circuit de conférence est conçu entre ces pilotes et le pilote (2, 3) de l'espace aérien (52, 53) contigu.

7. Procédé selon l'une quelconque des revendications précédentes, **caractérisé en ce qu'**un message vocal d'un pilote (2, 3) surveillant un espace aérien (52, 53) contigu lorsque dans l'espace aérien (52, 53) contigu respectif aucun aéronef attribué ne se trouve, est transmis à tous ou à un pilote (1a, 1b, 1c) prédéfini de l'espace aérien (50) à surveiller.

8. Procédé selon l'une quelconque des revendications précédentes, **caractérisé en ce que** pour le cas où un aéronef (4D-4G) quitte l'espace aérien (50) surveillé, l'association de l'aéronef (4D-4G) au pilote (1a, 1b, 1c) respectif est supprimée.

9. Agencement pour la transmission de communication vocale entre un nombre de pilotes (1a, 1b, 1c) et un nombre d'aéronefs (4D-4G) se trouvant dans le même espace aérien (50), comprenant
a) une unité de transmission vocale (20)
b) pour chaque pilote respectivement un poste de travail de pilote (11a, 11b, 11c) qui est couplé à une unité de transmission vocale (20) et
c) des installations d'émission et de réception (31a-31e) pour la transmission sans fil, **en particulier terrestre,** de radiotéléphonie aux aéronefs qui sont couplés à l'unité de transmission vocale (20), dans lequel chaque installation d'émission et de réception (31a-31e) présente respectivement une zone de couverture (310a-310e) prédéfinie dans l'espace aérien (50) et
d) qu'une unité d'association est prévue, laquelle attribue exclusivement à chacun des pilotes (1a, 1b, 1c) respectivement une quantité partielle des aéronefs (4D-4G) se trouvant dans l'espace aérien (50),
e) dans lequel un nombre de pilotes (1a, 1b, 1c) est en liaison de communication par le biais d'une pluralité d'installations d'émission et de réception avec les aéronefs (4D-4G), qui se trouvent dans l'espace aérien 50,
dans lequel l'unité d'association attribue à chaque pilote (1a, 1b, 1c) des aéronefs (4D-4G) qui se trouvent dans différentes zones de couverture (310a-310e) d'installations d'émission et de réception (31a-31e), dans lequel des aéronefs (4D-4F) peuvent aussi se trouver dans ces zones de couverture (310a-310e), lesquels sont pilotés par d'autres pilotes (1a, 1b, 1c), **caractérisé en ce qu'**il ne nécessite pas l'association d'un aéronef à un pilote, que les aéronefs (4D-4G) individuels associés à un pilote se trouvent dans la zone de couverture d'une installation d'émission et de réception (31a-31e) déterminée,
f) qu'une unité de détermination de position (6) est prévue, laquelle détecte la position des aéronefs (4D-4G) dans l'espace aérien (50),
g) qu'une unité de localisation (21) est prévue, laquelle constate en raison de la position détectée par l'unité de détermination de position (6) pour les aéronefs (4D-4G) individuels, dans la zone de couverture (310a-310e) de laquelle des installations d'émission et de réception (31a-31e) se trouvent les aéronefs (4D-4G) individuels, et associe les aéronefs (4D-4G) individuels à la zone de couverture (310a-310e) respective ainsi qu'à l'installation d'émission et de réception (31a-31e) respective, et transmet cette association à l'unité de transmission vocale (20),
h) que l'unité de transmission vocale (20) est réalisée afin de, pour le cas où un des pilotes (1a, 1b, 1c) émet un message vocal (TX) à un aéronef (4D-4G) qui lui est attribué, transmettre le message vocal (TX) à l'installation d'émission et de réception (31a-31e) associée à l'aéronef (4D-4G) respectif, et
i) que l'unité de transmission vocale (20) est réalisée afin de, pour le cas où une installation d'émission et de réception (31a-31e), reçoit un message vocal (RX), transmettre le message vocal (RX) reçu aux pilotes (1a, 1b, 1c) auxquels au moins un aéronef (4D-4G) est attribué qui se trouve dans la zone de couverture de l'installation d'émission et de réception (31a-31e) concernée.

10. Agencement selon la revendication 9, **caractérisé en ce que** l'unité de détermination de position (6) détecte à nouveau la position des aéronefs (4D-4G) dans l'espace aérien selon un intervalle prédéfini et transmet à l'unité de localisation (21), dans lequel l'unité de localisation (21) est réalisée afin de déterminer de nouveau lors de la réception de nouvelles positions d'aéronefs, dans laquelle zone de couverture (310a-310e) l'aéronef (4D-4G) se trouve, et d'associer de nouveau l'aéronef (4D-4G) concerné à la zone de couverture (310a-310e) respective et de transmettre cette association à l'unité de transmission vocale (20).

11. Agencement selon la revendication 9 ou 10, **caractérisé en ce que** pour chaque pilote (1a, 1b, 1c) respectivement un élément de radiocommande (12a, 12b, 12c) et/ou élément de commande à radar (13a, 13b, 13c) est prévu, lequel offre au pilote (1a, 1b, 1c) la sélection d'un aéronef (4D-4G) qui lui est attribué pour la transmission d'un message vocal (TX),
- **en ce que** l'élément de radiocommande (12a, 12b, 12c) représente un nombre de champs de commande (121) pour les aéronefs (4D-4G) qui lui sont attribués et permet au pilote la sélection de l'aéronef (4D-4G) concerné par le choix du champ de commande (121), ou
- **en ce que** l'élément de commande à radar (13a, 13b, 13c) représente les aéronefs (4D-4G) se trouvant dans l'espace aérien (50) selon leur position comme symbole (A, B, C, D, E, F, G) et permet au pilote par sélection d'une position du symbole (A, B, C, D, E, F, G) d'un aéronef (4D-4G) qui se trouve au niveau de la position concernée, dans lequel l'élément de commande à radar entreprend éventuellement une association seulement lorsque l'aéronef (4D-4G) sélectionné est attribué au pilote sélectionnant (1a, 1b, 1c).

12. Agencement selon l'une quelconque des revendications 9 à 11, **caractérisé en ce que** l'unité de transmission vocale (20) établit sur demande d'un premier pilote surveillant l'espace aérien (50) une liaison de communication avec un second pilote (1a, 1b, 1c) surveillant le même espace aérien (50) pour le remplacement et pour la transmission de messages vocaux,
a) dans lequel l'élément de commande à radar (12a, 12b, 12c) représente au premier pilote (1a, 1b, 1c) les aéronefs (4D-4G) surveillés par les autres pilotes (1a, 1b, 1c) surveillant le même espace aérien et les offres à la sélection, et
l'unité de transmission vocale (20) établit lors de la sélection d'un aéronef surveillé selon l'association entreprise par un second pilote (1a, 1b, 1c) la liaison de communication entre le premier et le second pilote, ou
b) dans lequel l'élément de commande à radar (13a, 13b, 13c) affiche au premier pilote (1a, 1b, 1c) les aéronefs (4D-4G) associés aux pilotes restants selon leur position comme symbole et les tient à disposition pour le choix et
l'unité de transmission vocale (20) établit lors de la sélection d'un aéronef surveillé selon l'association entreprise par un second pilote (1a, 1b, 1c) la liaison de communication entre le premier et le second pilote.

13. Agencement selon l'une quelconque des revendications 9 à 12, **caractérisé en ce que** l'unité d'association pour le cas où un aéronef (4D-4G) parvient dans la zone proche (54) de l'espace aérien (50) à surveiller, associe l'aéronef (4D-4G) concerné à un des pilotes selon des critères prédéfinis.

14. Agencement selon la revendication 13, **caractérisé en ce que** l'unité de transmission vocale (20) transmet un message vocal d'un pilote (2, 3) surveillant un espace aérien (52, 53) contigu au ou aux pilotes (1a, 1b, 1c), auquel ou auxquels sont attribués ces aéronefs (4D-4G) qui se trouvent dans la zone proche (54) de l'espace aérien (50) à surveiller dans l'espace aérien contigu (52, 53),
- dans lequel l'unité de transmission vocale (20) conçoit pour des aéronefs (4D-4G) associés à une pluralité de différents pilotes (1a, 1b, 1c) éventuellement un circuit de conférence entre ces pilotes et le pilote (2, 3) de l'espace aérien (52, 53) contigu.

15. Agencement selon l'une quelconque des revendications 9 à 13, **caractérisé en ce que** l'unité de transmission vocale (20) transmet un message vocal d'un pilote (2, 3) surveillant un espace aérien contigu (52, 53) lorsqu'aucun aéronef attribué ne se trouve dans l'espace aérien (52 53) contigu respectif, à tous ou à un pilote (1a, 1b, 1c) prédéfini de l'espace aérien (50) à surveiller.

16. Agencement selon l'une quelconque des revendications 9 à 14, **caractérisé en ce que** l'unité d'association pour le cas où un aéronef (4D-4G) quitte l'espace aérien (50) surveillé, supprime l'association de l'aéronef (4D-4G) au pilote (1a, 1b, 1c) respectif.
